(19) **Europäisches Patentamt / European Patent Office / Office européen des brevets**

(11) **EP 4 386 334 B1**

(12) **FASCICULE DE BREVET EUROPEEN**

(45) Date de publication et mention de la délivrance du brevet:
**30.04.2025 Bulletin 2025/18**

(21) Numéro de dépôt: **23213752.1**

(22) Date de dépôt: **01.12.2023**

(51) Classification Internationale des Brevets (IPC):
**G01G 19/02** (2006.01) **G01G 23/12** (2006.01)

(52) Classification Coopérative des Brevets (CPC):
**G01G 19/021; G01G 23/12**

(54) **PROCÉDÉ ET DISPOSITIF DE PESÉE NOTAMMENT POUR LA PESÉE DE VÉHICULES MONTÉS SUR ROUES**

VERFAHREN UND WÄGEEINRICHTUNG, INSBESONDERE ZUM WIEGEN VON AUF RÄDERN MONTIERTEN FAHRZEUGEN

WEIGHING METHOD AND DEVICE, IN PARTICULAR FOR WEIGHING WHEELED VEHICLES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **13.12.2022 FR 2213284**

(43) Date de publication de la demande:
**19.06.2024 Bulletin 2024/25**

(73) Titulaires:
- **Arpege Master K**
  **69800 Saint Priest (FR)**
- **Université Jean Monnet Saint-Étienne**
  **42100 Saint-Étienne (FR)**
- **Institut National des Sciences Appliquees de Lyon (Insa Lyon)**
  **69100 Villeurbanne (FR)**
- **Ecole Centrale de Lyon**
  **69134 Ecully Cedex (FR)**
- **UNIVERSITE CLAUDE BERNARD - LYON 1**
  **69100 Villeurbanne (FR)**
- **Centre National de la Recherche Scientifique**
  **75016 Paris (FR)**

- **Université Lumière Lyon 2**
  **69007 Lyon (FR)**

(72) Inventeurs:
- **FOSSI, Frédéric**
  **01140 Saint Didier sur Chalaronne (FR)**
- **AMOVIN ASSAGBA, Martial**
  **69200 Venissieux (FR)**
- **JACQUES, Julien**
  **69800 Saint-Priest (FR)**
- **GANNAZ, Irene**
  **38190 Villard-Bonnot (FR)**

(74) Mandataire: **Germain Maureau**
  **12, rue Boileau**
  **69006 Lyon (FR)**

(56) Documents cités:
**CN-U- 203 643 013**

- **AMOVIN-ASSAGBA MARTIAL ET AL: "Outlier detection in multivariate functional data through a contaminated mixture model", COMPUTATIONAL STATISTICS AND DATA ANALYSIS, vol. 174, 6 April 2022 (2022-04-06), NL, pages 107496, XP093088626, ISSN: 0167-9473, DOI: 10.1016/j.csda.2022.107496**

**Description**

Domaine technique

La présente invention concerne la pesée de véhicules automobiles ou tractés, montés sur roues, tels que les poids lourds ou les wagons.

Etat de la technique

Généralement, la pesée de véhicules sur roues est effectuée à l'aide d'un pont-bascule comportant un plateau disposé sur un support, des capteurs de pesée étant fixés entre le plateau et le support pour mesurer le poids exercé par le plateau sur le support. Les capteurs peuvent être disposés sur les bords du plateau. Les signaux analogiques issus des capteurs peuvent alors être numérisés et stockés pour être analysés. Une mesure est donc constituée par un ensemble de courbes, chaque courbe étant représentative des variations du signal issu d'un des capteurs.

De nombreuses approches statistiques ont été développés pour analyser de telles données. Parmi ces approches, l'analyse de données fonctionnelles apparait appropriée pour analyser des données relatives aux variations en fonction du temps d'un ou plusieurs signaux issus d'un ou plusieurs capteurs, notamment lorsque ces données sont acquises à une fréquence élevée, par exemple une ou plusieurs centaines de Hertz. Dans ce contexte, la détection de mesures erronées est un problème crucial.

L'analyse de données fonctionnelles s'appuie sur une modélisation du signal issu d'un capteur par une combinaison linéaire de fonctions appartenant à l'ensemble $L_2$ des fonctions de carré intégrable. Certains modèles proposent de classifier les signaux mesurés en groupes homogènes (appelés "clusters"), ce qui faciliterait la mise en évidence de signaux erronés. En effet, les différences entre les groupes sont principalement dues à des différences entre les entités, ici les véhicules qui sont mesurés, indépendamment de la présence éventuelle d'anomalies. Ainsi, le document [1] décrit un modèle dans lequel les données normales et anormales sont modélisées dans un sous-espace fonctionnel, en mettant en œuvre une analyse en composantes principales fonctionnelle multivariée.

Ce modèle permet de détecter des anomalies dans les mesures, avec des taux de faux positifs et de faux négatifs très bas. En outre, il présente l'avantage de pouvoir s'affiner au fur et à mesure de son exécution, et ne pas nécessiter de fixer une proportion d'anomalies, ni de fixer un nombre de groupes. En revanche, ce modèle nécessite la mise en œuvre d'une capacité de mémorisation importante et/ou des temps d'exécution qui peuvent être excessifs, notamment en milieu industriel. Ainsi, un ordinateur courant exécutant ce modèle fournit un résultat en plusieurs minutes, sachant qu'un véhicule traverse le pont-bascule en quelques dizaines de secondes. Voir également le document [2] dans le même domaine technique.

Il est donc souhaitable de pouvoir proposer un procédé de traitement de pesées qui soit robuste, et dont la vitesse de traitement est compatible avec la pesée d'un véhicule à l'aide d'un pont-bascule.

Résumé

Des modes de réalisation concernent un procédé de pesée d'un véhicule monté sur roues, comprenant des étapes consistant à : déplacer le véhicule sur un pont-bascule de manière à ce qu'un premier train de roues du véhicule sollicite simultanément des capteurs d'entrée du pont-bascule, puis simultanément des capteurs de sortie du pont-bascule ; acquérir et échantillonner, par une unité de traitement, des signaux de pesée issus des capteurs d'entrée et de sortie, pendant que le véhicule traverse le pont-bascule ; et exécuter par l'unité de traitement une pluralité d'itérations d'un algorithme d'espérance-maximisation, chaque itération comprenant le calcul de paramètres d'un modèle, à l'aide d'une analyse en composantes principales fonctionnelles multivariée, et le calcul d'estimations de probabilités, le modèle étant basé sur une approximation de chacun des signaux de pesée par une combinaison linéaire de fonctions de base de type carré intégrable pondérées par des coefficients, les estimations de probabilités calculées du modèle comprenant pour chaque signal de pesée une probabilité que le signal de pesée appartienne à un groupe homogène de signaux de pesée donné parmi plusieurs groupes homogènes, et une probabilité que le signal de pesée présente ou non une anomalie. Selon un mode de réalisation, les estimations de probabilités sont obtenues en considérant seulement des coefficients de fonctions propres ayant une incidence supérieure à une valeur de seuil sur les résultats et en utilisant un opérateur de projection des coefficients des fonctions propres dans des sous-espace fonctionnels, chaque sous-espace fonctionnel étant défini pour un groupe homogène respectif des groupes homogènes, les coefficients des fonctions propres étant obtenus à partir de l'analyse en composantes principales fonctionnelles multivariée.

Grâce à ces dispositions, les signaux issus des paires de capteurs d'entrée ou de sortie sont fortement corrélés. Les signaux issus des capteurs d'un même côté du pont-bascule sont également fortement corrélés avec un décalage temporel correspondant au temps que met le véhicule à franchir la distance entre ces capteurs. Il en résulte que le nombre de fonctions de base du modèle et le nombre de groupes sont notablement plus réduits que si les signaux de pesée n'étaient pas corrélés entre eux. Les calculs de détection d'anomalie sont donc notablement réduits.

Selon un mode de réalisation, chaque itération de la pluralité d'itérations est basée sur l'exécution d'un algorithme d'espérance-maximisation comprenant : une étape d'espérance comprenant le calcul des estimations de probabilités, une première étape de maximisation comprenant le calcul d'estimations des paramètres du modèle à l'aide d'une analyse en composantes principales fonctionnelles multivariée, permettant de définir pour chaque groupe homogène une variance matricielle dans un sous-espace fonctionnel défini par des fonctions propres, la variance matricielle étant modélisée de façon parcimonieuse par des éléments formés des plus grandes valeurs propres et des éléments considérés comme un bruit et tous égaux à l'un des paramètres du modèle, et une seconde étape de maximisation comprenant le calcul d'un facteur d'inflation.

Selon un mode de réalisation, chaque probabilité que l'un des signaux de pesée appartienne à l'un des groupes homogènes est obtenue en calculant le rapport entre une densité gaussienne contaminée du groupe homogène et une somme des densités gaussiennes contaminées de tous les groupes homogènes, en tenant compte des coefficients, la densité gaussienne contaminée de chacun des groupes homogènes étant calculée par la somme pondérée d'une première densité gaussienne de chacun des signaux normaux et d'une seconde densité gaussienne de chacun des signaux anormaux dans chaque groupe homogène, une matrice de covariance de la densité gaussienne des signaux anormaux étant égale à une matrice de covariance de la densité gaussienne des signaux normaux multipliée par un facteur d'inflation, chacune des première et seconde densités gaussiennes étant calculée par la somme d'une norme de projection des coefficients du modèle dans un sous-espace fonctionnel défini pour le groupe homogène, d'une norme d'une différence entre les coefficients et la projection des coefficients dans le sous-espace fonctionnel défini pour le groupe homogène et un terme dépendant des valeurs propres de la matrice de covariance, et chaque probabilité que l'un des signaux de pesée de l'un des groupes homogènes présente ou non une anomalie est égale au rapport entre la densité gaussienne des signaux normaux du groupe homogène et la densité gaussienne contaminée du groupe homogène, toutes deux étant calculées avec les coefficients.

Cette disposition permet de simplifier d'une manière importante les calculs des paramètres d'appartenance d'un signal de pesée à un groupe homogène donné, et d'anomalie d'un signal de pesée.

Selon un mode de réalisation, le procédé comprend une étape d'initialisation des paramètres et des estimations de probabilités du modèle, de manière aléatoire ou bien en utilisant des algorithmes reposant sur une minimisation d'une somme calculée pour chaque groupe homogène de distances entre chaque coefficient et un centroïde du groupe homogène.

Selon un mode de réalisation, une nouvelle itération est exécutée si une variable d'erreur portant sur les paramètres et les estimations de probabilités calculés est supérieure à une valeur de seuil et si un nombre maximum d'itérations n'est pas atteint.

Selon un mode de réalisation, les paramètres calculés du modèle comprennent pour chaque groupe homogène de signaux de pesée : un paramètre représentant une proportion de signaux de pesée appartenant au groupe homogène, un paramètre représentant une proportion de signaux de pesée normaux dans le groupe homogène, un paramètre représentant une moyenne d'une distribution gaussienne de du groupe homogène, une matrice rassemblant des coefficients d'un ensemble de fonctions propres du groupe homogène, les coefficients des fonctions propres étant obtenus à partir de l'analyse en composantes principales fonctionnelles multivariée, et une variance matricielle ayant la forme d'une matrice diagonale rassemblant des valeurs propres du groupe homogène, obtenues à partir de l'analyse en composantes principales fonctionnelles multivariée, la variance matricielle comprenant les premières plus grandes valeurs propres et des éléments égaux à une valeur moyenne des plus petites valeurs propres, et un paramètre représentant un facteur d'inflation de la matrice de covariance du groupe homogène, calculé en utilisant des opérateurs de projection.

Selon un mode de réalisation, le procédé comprend des étapes d'acquisition de nouveaux signaux de pesée, de calcul de nouveaux coefficients obtenus en approximant chacun des nouveaux signaux de pesée par une combinaison linéaire des fonctions de base pondérées par des nouveaux coefficients, et de mise à jour des paramètres et des estimations de probabilités du modèle en une itération, la probabilité que l'un des nouveaux signaux de pesée appartienne à un groupe homogène de signaux de pesée et la probabilité que l'un des nouveaux signaux de pesée présente ou non une anomalie, étant estimées en utilisant les opérateurs de projection pour projeter les nouveaux coefficients dans les sous-espaces fonctionnels définis à partir des paramètres du modèle précédemment calculés.

De cette manière, il peut être déterminé si de nouvelles mesures présentent des anomalies à partir des paramètres du modèle précédemment calculés. Les paramètres du modèle peuvent ainsi être affinés et évoluer au fur et à mesure de l'acquisition de nouvelles mesures. Par ailleurs, grâce à ce procédé de mise à jour, il n'est pas nécessaire de mémoriser l'ensemble des mesures qui ont précédemment été utilisées pour déterminer les paramètres du modèle.

Selon un mode de réalisation, les paramètres mis à jour du modèle comprennent pour chaque groupe homogène : un paramètre représentant une proportion de précédents et de nouveaux signaux de pesée appartenant au groupe homogène, et calculé par une moyenne pondérée du paramètre précédent correspondant et d'un nombre de nouveaux signaux appartenant au groupe homogène, un paramètre représentant une proportion de précédents et de nouveaux signaux de pesée normaux dans le groupe homogène, et calculé par une moyenne pondérée du paramètre précédent correspondant et du nombre de nouveaux signaux normaux appartenant au groupe homogène, un paramètre représentant une moyenne des précédents et nouveaux signaux de pesée d'une distribution gaussienne du groupe homogène, et calculé par une moyenne pondérée du paramètre précédent correspondant et une moyenne des nouveaux signaux appartenant au groupe homogène, une matrice de vecteurs formés par des coefficients de fonctions propres, la matrice étant estimée par une multiplication d'une matrice de rotation par de la matrice précédente si les nouveaux signaux de pesées sont représentés dans le sous-espace fonctionnel, ou sinon estimée par une multiplication de la matrice de rotation par une matrice constituée d'une concaténation de la matrice précédente correspondante et d'une matrice constituée d'erreurs de projection des nouveaux coefficients dans le sous espace fonctionnel, une variance matricielle ayant la forme d'une matrice diagonale rassemblant de nouvelles valeurs propres du groupe homogène, obtenues à partir de la variance matricielle précédente, de la matrice de vecteurs précédente, des nouveaux coefficients et de la moyenne des signaux de pesée normaux, et des éléments obtenus à partir d'une valeur moyenne de la différence entre la somme des éléments de la variance matricielle précédente et la somme des nouvelles valeurs propres, et un paramètre représentant un facteur d'inflation de la matrice de covariance du groupe homogène, calculé par une moyenne pondérée du paramètre précédent correspondant et d'un facteur d'inflation des nouveaux signaux de pesée calculé à partir d'opérateurs de projection.

Selon un mode de réalisation, le procédé comprend des étapes d'acquisition et d'échantillonnage, par l'unité de traitement de signaux de pesée issus de capteurs intermédiaires installés sur le pont-bascule entre les capteurs d'entrée et de sortie.

Des modes de réalisation peuvent également concerner un système de pesée d'un véhicule monté sur roues, comprenant : un pont-bascule comprenant des capteurs d'entrée disposés de manière à être sollicités simultanément par un premier train de roues du véhicule, et des capteurs de sortie disposés de manière à être sollicités simultanément par le premier train de roues du véhicule, lorsque le véhicule traverse le pont-bascule, une unité de traitement configurée pour acquérir et échantillonner des signaux de pesée issus des capteurs d'entrée et de sortie et exécuter une pluralité d'itérations de calcul de paramètres et des estimations de probabilités d'un modèle, conformément au procédé précédemment défini.

Selon un mode de réalisation, les capteurs sont alignés le long de bords latéraux du pont-bascule.

Cette disposition permet d'obtenir des mesures redondantes, et donc de faciliter la détection d'anomalies par le procédé défini précédemment.

Selon un mode de réalisation, le système comprend au moins trois capteurs alignés le long d'un bord latéral du pont-bascule.

Cette disposition permet d'obtenir davantage de mesures redondantes, et donc de faciliter la détection d'anomalies par le procédé défini précédemment.

Selon un mode de réalisation, les capteurs sont disposés de manière à être alignés le long d'axes perpendiculaires à une direction longitudinale du pont-bascule.

Cette disposition permet d'obtenir simultanément plusieurs mesures corrélées, et donc de limiter les calculs de détection d'anomalies par le procédé défini précédemment.

Brève description des figures

La présente invention sera bien comprise à l'aide de la description qui suit d'exemples de réalisation en référence aux figures annexées, dans lesquelles des signes de références identiques correspondent à des éléments structurellement et/ou fonctionnellement identiques ou similaires.

La figure 1 est une vue schématique de dessus d'un pont-bascule, selon un mode de réalisation,
La figure 2 est une vue schématique de profil du pont-bascule, selon un mode de réalisation,
La figure 3 représente schématiquement un système de traitement de mesures issues de capteurs installés dans le pont-bascule, selon un mode de réalisation,
La figure 4 représente schématiquement des fonctions du système de traitement, selon un mode de réalisation,
La figure 5 représente des étapes d'un procédé de détermination de mesures présentant des anomalies, mis en œuvre par l'unité de traitement, selon un mode de réalisation,
La figure 6 représente des étapes d'un procédé incrémental de détermination de mesures présentant des anomalies, mis en œuvre par l'unité de traitement, selon un mode de réalisation,
La figure 7 est une vue schématique de dessus d'un pont-bascule, selon un autre mode de réalisation,
La figure 8 est une vue schématique de profil du pont-bascule de la figure 7.

Description détaillée

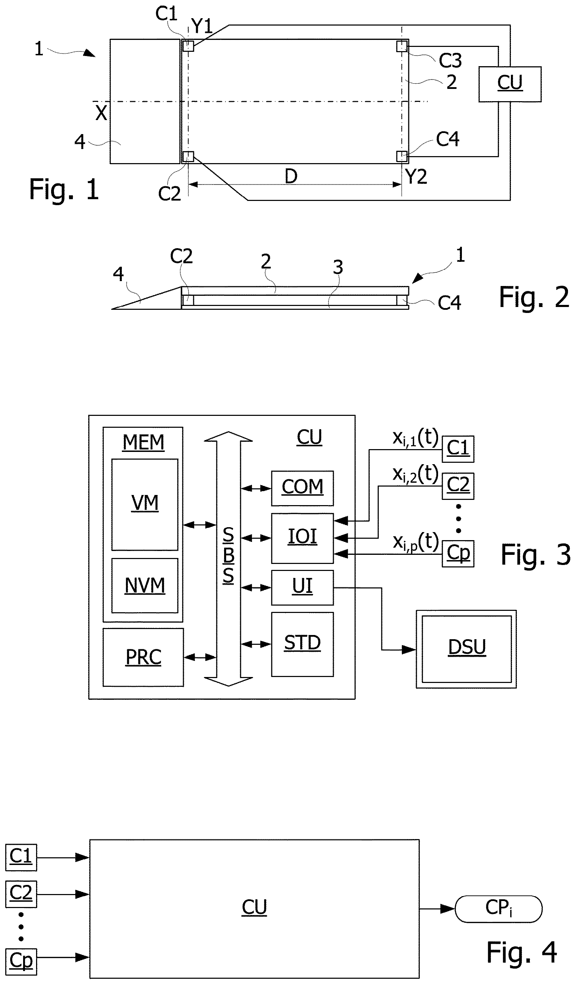

Les figures 1 et 2 représentent un pont-bascule 1 pour peser un véhicule sur roues. Le pont 1 comprend un plateau supérieur 2 prévu pour recevoir un véhicule. Le pont 1 peut comprendre une base 3 sur laquelle est fixé le plateau 2. Le plateau 2 est fixé à la base 3 par l'intermédiaire de capteurs C1, C2, C3, C4, de manière à ce que tout le poids du plateau repose sur les capteurs C1-C4. La base 3 peut être simplement posée au sol.

Le pont 1 peut également comprendre une rampe d'accès 4 disposée à une extrémité d'entrée du pont 1 pour permettre aux véhicules de monter sur celui-ci (et éventuellement descendre en marche arrière). Si le pont 1 est prévu pour être traversé par les véhicules à peser, le pont 1 peut comporter également une rampe de sortie à une extrémité de sortie opposée à l'extrémité d'entrée, suivant une direction longitudinale X du pont. Le véhicule peut se déplacer sur le pont 1 pendant que les signaux issus des capteurs C1-C4 sont acquis et échantillonnés par une unité de traitement CU.

La figure 3 représente un système de traitement de mesures issues des capteurs C1-Cp, selon un mode de réalisation. Le système comprend l'unité de traitement CU connectée aux capteurs C1, C2, ... , Cp (avec p par exemple égal à 4) disposés entre le plateau 3 et la base du pont 1. L'unité de traitement CU peut comprendre un processeur PRC, une mémoire MEM et un bus système SBS d'adresse et de donnée. Le bus SBS permet d'interconnecter le processeur PRC, la mémoire MEM. Le processeur PRC peut comprendre des composants matériels pour effectuer des traitements de données et de signaux et pour exécuter des instructions de programme stockées dans la mémoire MEM.

L'unité de traitement CU peut être adaptée pour exécuter des instructions mémorisées sur un support d'enregistrement. L'unité de traitement CU peut être connectée à d'autres systèmes par l'intermédiaire d'un réseau tel qu'un réseau intranet ou le réseau internet. L'unité de traitement CU peut comprendre un ou plusieurs dispositifs qui individuellement ou en coopération exécutent des instructions mémorisées sur un support d'enregistrement.

La mémoire MEM peut comprendre une mémoire volatile VM, par exemple de type RAM (Random-Access Memory), et une mémoire non volatile NVM, par exemple de type ROM ("Read-Only Memory", EPROM ("Erasable Programmable Read-Only Memory"), EEPROM ("Electrically Erasable Programmable Read-Only Memory"), mémoire Flash, etc.. La mémoire peut également comprendre tout support qui peut être utilisé pour stocker des programmes ou des données et qui peut être accédé par le processeur PRC. L'unité de traitement CU peut en outre comprendre ou être connectée à un support d'enregistrement STD qui peut comprendre une ou plusieurs unités de mémoire, telles qu'un disque dur local ou externe, et une mémoire Flash. L'unité de stockage STD peut être utilisée comme unité de stockage non-volatile pour stocker des programmes et/ou des données.

L'unité de traitement CU peut également comprendre un circuit d'interface utilisateur UI configuré pour recevoir des commandes d'un utilisateur lorsque l'unité de commande exécute un programme, par l'intermédiaire d'organes de commande tels qu'un clavier, une souris, et une surface sensible. Le circuit d'interface UI peut être également configuré pour être connecté à un dispositif de sortie tel qu'un écran d'affichage DSU. Le circuit d'interface UI peut être relié au processeur PRC, par l'intermédiaire du bus SBS, ou tout autre interface.

L'unité de traitement CU peut également comprendre un circuit d'entrée/sortie IOI relié au processeur PRC par l'intermédiaire du bus SBS. Le circuit d'entrée/sortie IOI peut être configuré pour recevoir des signaux analogiques ou numériques, et en particulier, pour se connecter aux capteurs C1-Cp.

L'unité de traitement CU peut également comprendre un circuit de communication COM configuré pour relier l'unité de traitement CU à un réseau de transmission de données.

La figure 4 représente l'unité de traitement CU recevant des signaux de pesée issus des capteurs C1-Cp. L'unité de traitement CU est configurée pour calculer des paramètres d'un modèle à l'aide d'un algorithme d'analyse en composantes principales fonctionnelles multivariée, appliqué aux signaux de pesée issus des capteurs C1-Cp. Ainsi, l'unité de traitement CU permet d'estimer pour chaque signal de pesée une probabilité que le signal de pesée appartienne à un groupe homogène de signaux de pesée donné parmi plusieurs groupes homogènes, et une probabilité que le signal de pesée présente ou non une anomalie.

L'unité de traitement CU est configurée pour fournir un indicateur de comportement $CP_i$ pour chaque pesée i, à la suite du passage d'un véhicule sur le pont 1, et ainsi signaler la présence d'anomalies en ce qui concerne les pesées.

Les signaux de mesure numérisés $xi(t) = (x_{i,1}(t), x_{i,2}(t), ..., x_{i,p}(t))$ comprennent un signal de mesure $x_{i,j}(t)$, fourni par chacun des capteurs C1-Cp pendant un intervalle de mesure $[t_{i,0}, t_{i,1}]$, l'indice i représentant un numéro de pesée, l'indice j représentant un capteur, et t représentant le temps appartenant à l'intervalle de mesure $[t_{i,0}, t_{i,1}]$.

Chacun des signaux de mesure $x_{i,j}(t)$, une fois numérisé, comprend une séquence de points discrets qui peut être modélisée par une forme fonctionnelle de la forme suivante :

$$x_{i,j}(t) = \sum_{b=1}^{B_j} c_{i,j,b} f_{j,b}(t) \qquad (1)$$

avec $1 \le i \le n$, $1 \le j \le p$ et $t_{i,0} \le t \le t_{i,1}$, $f_{j,b}(t)$, $1 \le b \le B_j$, est l'une des fonctions de base utilisées pour modéliser le signal issu du

capteur j, $B_j$ le représente nombre de fonctions de base utilisées et $\{c_{i,j,b}\}$ représente un ensemble de coefficients. Le choix du type de fonctions de base $f_{j,b}$ et leur nombre dépend de la nature des données. Par exemple, des fonctions de Fourier peuvent être utilisées lorsque les données présentent des motifs périodiques, des fonctions de type spline peuvent être utilisées lorsque les données forment une courbe lisse, et des fonctions de type ondelettes peuvent être utilisées lorsque les données forment une courbe très irrégulière. Le nombre Bj de fonctions de base $f_{j,b}$ choisies dépend de la complexité de la courbe.

D'après le document [1], pour classifier les mesures multivariées observées $x_1, x_2, \ldots, x_m$ en K groupes et pour détecter la présence de mesures erronées, on associe aux signaux de mesure $x_i$ les variables latentes $z_i = (z_{i,1}, \ldots, z_{iK})$ et $y_i = (y_{i,1}, \ldots, y_{iK})$, telles que $z_{i,k} = 1$ si le signal de mesure $x_i$ appartient au groupe k, et sinon $z_{i,k} = 0$, et $y_{ik} = 0$ si le signal de mesure $x_i$ présente une anomalie et sinon $y_{ik} = 1$. Sachant que chaque signal mesure $x_i$ peut être identifié par ses coefficients de base $c_i$, le document [1] montre que l'ensemble des signaux de mesure peut être représenté par le modèle suivant :

$$g(c_i,u)= \sum_{k=1}^{K} p_k F_k \qquad (2)$$

dans lequel $u = \{p_k, a_k, q_k, h_k, e_k \,/\, k = 1, \ldots, K\}$ représente tous les paramètres du modèle à estimer, g représente la densité du mélange de distributions gaussiennes multivariées contaminées, $F_k(p_k,a_k,q_k,h_k,e_k) = [a_k \cdot fg(c_i,q_k,1,h_k)+(1-a_k) \cdot fg(c_i,q_k,e_k,h_k)]$, $p_k \in {]}0,1]$ est la proportion de signaux de mesure appartenant au groupe k, $\sum_{k=0}^{K} p_k = 1$, $a_k \in [0,1]$ est la proportion de signaux de mesure normaux appartenant au groupe k, $fg(c_i,q_k,e_k,h_k)$ est la densité d'une distribution gaussienne de moyenne $q_k$ et de matrice de covariance $h_k$, et représente la densité marginale des coefficients $c_i$, et $e_k \geq 1$ est un facteur d'inflation de la covariance. La fonction fg peut être exprimée par l'équation suivante :

$$fg(c_i,q_k,e_k,h_k) = \frac{1}{(2\pi)^{B/2}|e_k h_k|^{1/2}} \exp\left[-\frac{1}{2}(c_i-q_k)^T (e_k h_k)^{-1}(c_i-q_k)\right] \qquad (3)$$

dans laquelle $B = \sum_{j=1}^{p} B_j$ représente le nombre de fonctions de base utilisées pour modéliser les signaux mesurés.

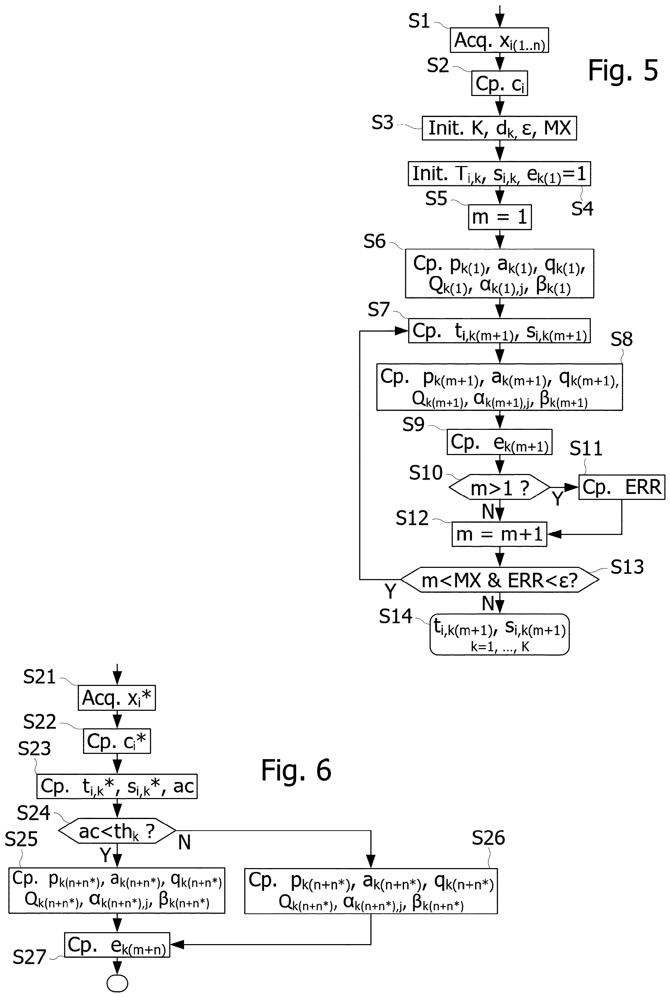

La figure 5 représente des étapes S1 à S14 exécutées par l'unité de traitement CU pour détecter la présence d'anomalies parmi les signaux mesurés $x_i$. Les étapes S1 à S9 sont exécutées successivement. A l'étape S1, un ensemble de signaux de mesure xi est reçu des capteurs C1-Cp, et numérisé. A l'étape S2, l'unité de traitement CU détermine les coefficients de base $c_i$ pour les signaux de mesure $x_i$ acquis, compte tenu des fonctions de base $f_{j,b}$ choisies. A l'étape S3, l'unité de traitement CU initialise des paramètres, à savoir un nombre de groupes K, des nombres de dimensions intrinsèques $d_k$ à considérer pour un sous-espace fonctionnel $SE_k$ présentant un nombre réduit de dimensions, pour chaque groupe k, une valeur d'erreur maximum $\varepsilon$ par exemple fixée à 0.0001, et un nombre maximum d'itérations MX. Les nombres de dimensions $d_k$ peuvent être déterminés par une méthode de recherche par grille de nombres entiers positifs ou le test de Catell, tous deux mettant en oeuvre la méthode BIC (Bayesian Information Criterion). Le sous espace $SE_k$ est engendré par $d_k$ fonctions propres qui sont obtenues à l'aide d'une analyse en composantes principales fonctionnelle multivariée.

A l'étape S4, les estimations respectives $t_i$ et $s_i$ des variables latentes $z_i$ et $y_i$, et les paramètres $e_k$ sont initialisés. L'estimation $t_i$ peut être initialisée de manière aléatoire ou en utilisant des algorithmes qui reposent sur la minimisation de la somme des distances entre chaque donnée et le centroïde du groupe k. L'estimation de probabilité $s_i$ est initialisée à 1 (pas d'anomalie). Les paramètres $e_k$ sont initialisés à 1.

A l'étape S5, un index m est initialisé à 1. A l'étape S6, les paramètres $p_{k(1)}$, $a_{k(1)}$, $q_{k(1)}$, $Qk(1)$, $\alpha_{k(1),j}$, $\beta_{k(1)}$ de l'ensemble $u_{(1)}$ du modèle sont estimés pour une première itération (1).

D'une manière générale, les paramètres u du modèle peuvent être estimés en plusieurs itérations de l'algorithme d'espérance-maximisation EM ("Expectation-Maximization"), ou ECM ("Expectation Conditional Maximization") qui est une généralisation de l'algorithme EM. A chaque itération m de l'algorithme, des estimations de probabilités $t_{i,k(m)}$ et $s_{i,k(m)}$ sont calculées (à l'étape S7) à l'aide des expressions suivantes :

$$t_{i,k(m)} = \frac{p_{k(m)} F_{k(m)}}{\sum_{j=1}^{K} p_{j(m)} F_{j(m)}} \qquad (4)$$

$$s_{i,k(m)} = \frac{a_{k(m)} fg(c_i, q_{k(m)}, h_{k(m)})}{F_{k(m)}} \tag{5}$$

avec $F_{k(m)}(c_i, q_{k(m)}, e_{k(m)} h_{k(m)}) = a_{k(m)} \cdot fg(c_i, q_{k(m)}, h_{k(m)}) + (1 - a_{k(m)}) \cdot fg(c_i, q_{k(m)}, e_{k(m)} h_{k(m)})$. L'estimation $t_{i,k(m)}$ représente la probabilité postérieure évaluée à l'itération m que la mesure i appartienne au groupe k, et l'estimation $s_{i,k(m)}$ représente la probabilité évaluée à l'itération m que le mesure i présente ou non une anomalie, dans le groupe k.

Dépendamment de la régularité des signaux de pesées, le nombre de fonctions de bases utilisés peut être grand. Ainsi le nombre de paramètres à estimer pour la matrice de covariance peut être grand. Pour éviter les problèmes de grande dimension, les signaux de chaque groupe sont projetés dans un espace de dimension $d_k$ plus faible ($d_k < B$). La base spécifique de chaque groupe est obtenu par à partir des fonctions de bases f() par une analyse en composantes

principales fonctionnelle multivariée : $\varphi_{kl}(t) = \sum_{b=1}^{B} lq_{k,l,b} f_b(t)$ avec $lq_{k,l,b}$ les coefficients des fonctions propres $\varphi_{kl}$ exprimés dans la base initiale $f(\cdot)$.

La variance de chaque groupe k peut être modélisée de façon parcimonieuse. Les $d_k$ premières composantes de la variance du groupe k peuvent être modélisées précisément par les $d_k$ premières valeurs propres. Ainsi, les premières $d_k$ valeurs propres correspondent à la partie principale de la variabilité des données. Les $B-d_k$ dernières composantes sont considérées comme des composantes de bruit et modélisées d'une manière parcimonieuse par un unique paramètre $\beta_k$. De cette manière, la matrice de covariance du groupe k dans l'espace des fonctions propres peut être représentée par la matrice suivante :

$$A_k = \begin{pmatrix} \alpha_{k1} & & & 0 & & & \\ & \alpha_{k2} & & & & 0 & \\ & & \ddots & & & & \\ 0 & & & \alpha_{kd_k} & & & \\ & & & & \beta_k & & 0 \\ & & 0 & & & \ddots & \\ & & & & 0 & & \beta_k \end{pmatrix} = Q_k^T W^{1/2} h_k W^{1/2} Q_k \tag{6}$$

dans laquelle W est la matrice contenant les produits scalaires entre les fonctions de base $f(\cdot)$ et $Q_k$ (= $lq_{k,l,b}$, $l \leq B$ et $l \leq B$) est une matrice orthogonale de dimension B x B rassemblant les coefficients des fonctions propres du groupe homogène, ces coefficients étant obtenus à partir de l'analyse en composantes principales fonctionnelles multivariée, $lq_{k,l}$ représente la colonne l de la matrice $Q_k$ et $Q_k^T$ représente la matrice transposée de $Q_k$.

L'estimation du paramètre $e_k$ dépend de celle des paramètres $q_k$ et $h_k$ et réciproquement. L'ensemble des paramètres u du modèle sont estimés par l'algorithme ECM, le paramètre $e_k$ étant estimé à la suite de l'estimation des autres paramètres du modèle. Ainsi, à l'étape S6 de maximisation conditionnelle, les paramètres $p_k$, $a_k$, $q_k$, $Q_k$, $\alpha_k$, $\beta_k$ peuvent être estimés pour l'itération m (m=1) à l'aide d'une analyse en composantes principales fonctionnelles multivariée, permettant de définir un sous-espace fonctionnel ($SE_k$) de l'espace fonctionnel défini par l'ensemble des fonctions propres. A cet effet, les équations suivantes sont utilisées :

$$p_{k(m)} = \frac{\sum_{i=1}^{n} t_{i,k(m)}}{n} \tag{7}$$

$$a_{k(m)} = \frac{\sum_{i=1}^{n} t_{i,k(m)} s_{i,k(m)}}{\sum_{i=1}^{n} t_{i,k(m)}} \tag{8}$$

$$q_{k(m)} = \frac{\sum_{i=1}^{n} c_i \cdot t_{i,k(m)} \left( s_{i,k(m)} + (1 - s_{i,k(m)}) / e_{k(m)} \right)}{\sum_{i=1}^{n} t_{i,k(m)} \left( s_{i,k(m)} + (1 - s_{i,k(m)}) / e_{k(m)} \right)} \tag{9}$$

dans lesquelles les estimations $t_{i,k(m)}$ et $s_{i,k(m)}$ sont celles initialisées à l'étape S4. Pour estimer les paramètres de variance

EP 4 386 334 B1

$Q_k$, $\alpha_k$, $\beta_k$, on considère la matrice de covariance pour le groupe k, suivante :

$$H1_{k(m)} = \frac{1}{g_{k(m)}}\left(\sum_{i=1}^{n} t_{i,k(m)}(s_{i,k(l)} + (1-s_{i,k(l)})/e_{k(l)})\left(c_i - q_{k(m)}\right)^T\left(c_i - q_{k(m)}\right)\right) \qquad (10)$$

avec $g_{k(m)} = \sum_{i=1}^{n} t_{i,k(m)}$ .

Les $d_k$ premières colonnes de la matrice $Q_{k(m)}$ sont estimées à l'aide des coefficients des fonctions propres associés aux plus grandes valeurs propres de $W^{1/2}H1_kW^{1/2}$.

Les paramètres $\alpha_{k(m)}$ sont estimés par les $d_k$ plus grandes valeurs propres $lp1_{k,l(m)}$ de la matrice $W^{1/2}H1_kW^{1/2}$,

avec $lp1_{k,l(m)} = lq_{k,l}^T W^{1/2} H1_k W^{1/2} lq_{k,l}$ et $lq_{k,l}$ représente la colonne l de la matrice $Q_k$.

Le paramètre $\beta_{k(m)}$ est estimé grâce à l'équation suivante :

$$\beta_{k(m)} = \frac{1}{B-d_k}\left[tr(W^{1/2}H1_kW^{1/2}) - \sum_{l=1}^{d_k} lp1_{k,l(m)}\right] \qquad (11)$$

dans laquelle tr(X) représente la trace de la matrice X.

Chaque groupe homogène k est ainsi associé à une variance matricielle dans l'espace fonctionnel défini par les fonctions propres. La variance du modèle dans l'espace engendré par les fonctions propres est modélisée de façon parcimonieuse par des éléments formés des plus grandes valeurs propres $\alpha_{k,j}$ et des éléments considérés comme un bruit et tous égaux au paramètre $\beta_k$ du modèle.

A l'étape S7, les estimations de probabilités $t_{i,k(m+1)}$ et $s_{i,k(m+1)}$ sont calculées à l'aide des équations (4) et (5), pour l'itération suivante, en utilisant les valeurs des paramètres $p_{k(m)}$, $a_{k(m)}$, $q_{k(m)}$, $Q_{k(m)}$, $\alpha_{k(m)}$, $\beta_{k(m)}$ déterminés précédemment (étape S6 ou S8). A l'étape S8, les paramètres $p_{k(m+1)}$, $a_{k(m+1)}$, $q_{k(m+1)}$, $Q_{k(m+1)}$, $\alpha_{k(m+1)}$, $\beta_{k(m+1)}$ de l'itération suivante sont déterminés à l'aide des estimations de probabilités $t_{i,k(m+1)}$ et $s_{i,k(m+1)}$ calculées à l'étape S7 en réalisant les mêmes calculs qu'à l'étape S6.

A l'étape S9 de seconde maximisation conditionnelle, le paramètre $e_{k(m+1)}$ représentant le facteur d'inflation est estimé par l'équation suivante :

$$e_k(m+1) = MAX\{1, E_{k(m+1)}\} \qquad (12)$$

dans laquelle :

$$E_{k(m)} = \frac{\sum_{i=1}^{n} t_{i,k(m)}(1-s_{i,k(m)})\left(c_i - q_{k(m)}\right)h_{k(m)}^{-1}\left(c_i - q_{k(m)}\right)}{B(n1_{k(m)} - n2_{k(m)})}, \qquad (13)$$

$n1_{k(m)} = \sum_{i=1}^{n} z_{i,k(m)}$ est le nombre de signaux de mesure $x_{i,k}$ appartenant au groupe k et

$n2_{k(m)} = \sum_{i=1}^{n} z_{i,k(m)} y_{i,k(m)}$ est le nombre de signaux de mesure $x_{i,k}$ ne présentant pas d'anomalie dans le groupe k.

L'étape S11 est exécutée seulement si à l'étape S10, l'indice m est plus grand que 1, ensuite les étapes S12 et S13 sont exécutées. A l'étape S11, une variable d'erreur ERR est calculée à l'aide de l'équation suivante :

$$ERR = lc(m+1) - lc(m) \qquad (14)$$

dans laquelle :

$$Ic_{(m)} = \sum_{i=1}^{n} \sum_{k=1}^{K} \left\{ z_{i,k(m)}(\log(p_{k(m)}) + y_{i,k(m)}\log(a_{k(m)}) + (1-y_{i,k(m)})\log(1-a_{k(m)})) \right\}$$

$$-\frac{1}{2}\sum_{k=1}^{K} \left\{ B(n_{k(m)}-n_{k_n(m)})\log(e_{k(m)}) + e_{k(m)}\left(\sum_{l=1}^{d_k}\log(\alpha_{k,l(m)}) + \sum_{l=d_k+1}^{B}\log(\beta_{k,l(m)})\right) \right\}$$

$$+n1_{k(m)} \cdot tr\left[\sum_{l=1}^{d_k}\frac{Ip2_{k,l(m)}}{\alpha_{k,l(m)}} + \sum_{l=d_k+1}^{B}\frac{Ip2_{k,l(m)}}{\beta_{k,l(m)}}\right] - \frac{nB}{2}\log(2\pi) \qquad (15)$$

$$Ip2_{k,l(m)} = Iq_{k,l}^{T} W^{1/2} H2_k W^{1/2} Iq_{k,l}$$, avec $Iq_{k,l}$ représentant la colonne l de la matrice $Q_k$, et

$$H2_{k(m)} = \frac{1}{n1_{k(m)}}\left(\sum_{i=1}^{n} z_{i,k(m)}(y_{i,k(l)} + (1-y_{i,k(l)})/n1_{k(l)})\left(c_i - q_{k(m)}\right)^{T}\left(c_i - q_{k(m)}\right)\right) \qquad (16)$$

représente la matrice de covariance empririque du groupe k.

A l'étape S12, l'indice m est incrémenté de un. A l'étape S13, si l'indice m est inférieur au nombre maximum d'itérations MX et la variable ERR est supérieure à la valeur d'erreur maximum ε, alors l'unité de traitement CU exécute une itération supplémentaire à partir de l'étape S7. Dans le cas contraire, l'unité de traitement CU fournit en tant que résultats de l'algorithme les estimations $t_{i,k(m+1)}$ et $s_{i,k(m+1)}$, k = 1, ..., K, calculées lors de la dernière exécution de l'étape S6 et qui désignent les mesures $x_{i,k}$ correctes et les mesures erronées (étape S14). Ainsi, les indicateurs de comportement $CP_i$ peuvent être déterminés en recherchant un groupe homogène k (k = 1, ... , K) auquel appartient chaque signal de pesée i en appliquant la classification "Maximum A Posteriori" (MAP), telle que $MAP_{i,k}$ = 1 si k est la valeur pour laquelle la probabilité $t_{i,k}$ atteint son maximum pour le signal de pesée i et 0 sinon. Le groupe homogène k auquel appartient le signal de pesée i étant donc celui tel que $MAP_{i,k}$ = 1. La classification des pesées en différents groupes permet de déterminer comment le pont-bascule est utilisé, par exemple avec quel type de véhicule, suivant quelle modalité de montée et de descente du pont-bascule, et avec quelle méthode de pesée. Les indicateurs de comportement CPi sont ensuite définis sur la base des probabilités $s_{i,k}$, tel que pour un signal de pesée i appartenant à un groupe homogène k, $CP_{i,k}$ = "Normal" si $s_{i,k}$ > 0.5 et "Anormal" sinon. L'indicateur de comportement CPi pour la pesée i peut correspondre à l'indicateur $CP_{i,k}$, k étant tel que $MAP_{i,k}$ = 1. Ainsi les indicateurs de comportement $CP_{i,k}$ permettent de repérer des situations non conformes qui pourraient indiquer un dysfonctionnement.

L'usage de l'algorithme précédemment décrit peut être extrêmement coûteux en temps de calcul et en mémoire requise, notamment lorsque le nombre de données issues des mesures augmente. Cependant, dans un contexte industriel, il est souhaitable de limiter la puissance de calcul et la mémoire nécessaires.

Selon un mode de réalisation, le calcul des estimations $t_{i,k}$ et $s_{i,k}$ est simplifié en considérant seulement les coefficients des fonctions propres ayant une incidence non négligeable sur les résultats et en utilisant un opérateur de projection.

Chaque probabilité $t_{i,k(m+1)}$ est obtenue en calculant le rapport entre une densité gaussienne contaminée du groupe homogène et une somme des densités gaussiennes contaminées de tous les groupes homogènes, en tenant compte des coefficients $c_i$. La densité gaussienne contaminée de chacun des groupes homogènes k peut être calculée par la somme pondérée d'une première densité gaussienne de chacun des signaux normaux et d'une seconde densité gaussienne de chacun des signaux anormaux dans chaque groupe homogène k. Une matrice de covariance de la densité gaussienne des signaux anormaux est égale à une matrice de covariance de la densité gaussienne des signaux normaux multipliée par le facteur d'inflation $e_k$. Chacune des première et seconde densités gaussiennes peut être calculée par la somme d'une norme de projection des coefficients $c_i$ dans un sous-espace fonctionnel $SE_k$ défini pour le groupe homogène k, d'une norme d'une différence entre les coefficients et la projection des coefficients dans le sous-espace fonctionnel défini pour le groupe homogène k et un terme dépendant des valeurs propres de la matrice de covariance.

Chaque probabilité $s_{i,k}$ est égale au rapport entre la densité gaussienne des signaux normaux du groupe homogène et la densité gaussienne contaminée du groupe homogène, toutes deux étant calculées avec les coefficients $(c_i)$.

En effet, il peut être démontré que le calcul de la fonction fg($c_i$,$q_k$,$e_k$,$h_k$)] mise en œuvre pour calculer les estimations $t_{i,k}$ et $s_{i,k}$ (équations (4) et (5)), peut être simplifié de la manière suivante :

$$fg(c_i,q_k,e_k,h_k) = \exp\left\{-\frac{1}{2}\left[B.\log(2\pi)+\log(e_k)+\sum_{l=1}^{d_k}\log(\alpha_{kl})+(B-d_k)\log(\beta_k)\right.\right.$$
$$-\log(\det(W))+\frac{1}{e_k}\left\|P\left(W^{1/2}(c_i-q_k)\right)\right\|_{D_k}^2$$
$$\left.\left.+\frac{1}{\beta_k}\left\|W^{1/2}(c_i-q_k)-P\left(W^{1/2}(c_i-q_k)\right)\right\|^2\right]\right\} \qquad (17)$$

dans laquelle P représente l'opérateur de projection sur le sous-espace $SE_k$ qui est généré par les $d_k$ premières colonnes de la matrice $Q_k$ : $P(x) = \tilde{Q}_k\tilde{Q}_k^T x$, $\|x\|_{D_k}^2 = x^T.D_k.x$, $D_k = \tilde{Q}_kA_k^{-1}\tilde{Q}_k^T$, $\tilde{Q}_k$ est la matrice B x B contenant les $d_k$ premières composantes de $Q_k$ complétée par des zéros, $\overline{Q}_k = Q_k-\tilde{Q}_k$, $A_k$ est la matrice diagonale contenant les valeurs propres $a_{k1}, a_{k2}, ..., a_{kdk},b_k$, présentée par l'équation (6), et $\det(W)$ est le déterminant de la matrice W. L'expression de $E_k$ indiquée par l'équation (13) peut être aussi réécrite de la manière suivante :

$$E_k = \frac{\sum_{i=1}^{n} t_{i,k}(1-s_{i,k})\left[\left\|P\left(W^{1/2}(c_i-q_k)\right)\right\|_{D_k}^2+\frac{1}{b_k}\left\|W^{1/2}(c_i-q_k)-P\left(W^{1/2}(c_i-q_k)\right)\right\|^2\right]}{B(n1_k-n2_k)} \qquad (18)$$

Selon un mode de réalisation, illustré par les étapes S21 à S27 de la figure 6, les paramètres du modèle ($u_{(n)}$) et les estimations de probabilités ($t_{i,k(n)}$, $s_{i,k(n)}$) calculés par exemple à l'aide de l'algorithme de la figure 5, peuvent être mis à jour à chaque nouvelle acquisition d'un ensemble de mesures $x_i^*$. A cet effet, on définit un ensemble de seuils $th_k$, k = 1, ..., K, comprenant un seuil $th_k$ par groupe k. Les seuils $th_k$ permettent de déterminer si la modélisation des nouvelles mesures nécessite ou non l'ajout de nouvelles fonctions propres et donc augmenter la dimension des sous-espaces fonctionnels $SE_k$. Les paramètres $pk_{(n+n^*)}$, $a_{k(n+n^*)}$, $qk(n+ n^*)$, $Q_{k(n+n^*)}$, $\alpha_{k(n+n^*)}$, $\beta_{k(n+n^*)}$, $e_{k(n+n^*)}$, et les estimations de probabilités $t_{i,k(n+n^*)}$, $s_{i,k(n+n^*)}$ du modèle peuvent être mis à jour en une itération, la probabilité $t^*_{i,k}$ que l'un des nouveaux signaux de pesée $x^*_i$ appartienne à un groupe homogène de signaux de pesée et la probabilité $s^*_{i,k}$ que l'un des nouveaux signaux de pesée présente ou non une anomalie, étant estimées en utilisant les opérateurs de projection pour projeter les nouveaux coefficients dans les sous-espaces fonctionnels $SE_k$ définis à partir des paramètres du modèle précédemment calculés $p_{k(n)}$, $a_{k(n)}$, $q_{k(n)}$, $Q_{k(n)}$, $\alpha_{k(n),j}$, $\beta_{k(n)}$, $e_{k(n)}$, et des estimations de probabilités $t_{i,k(n)}$, $s_{i,k(n)}$.

Ainsi, à l'étape S21, l'unité de traitement CU acquiert un ensemble de n* mesures $x_i^*$, i=1, ..., n*. A l'étape S22, l'unité de traitement CU détermine les coefficients de base $c_i^*$ pour les signaux de mesure $x_i^*$ acquis, compte tenu des fonctions de base $f_{j,b}$ choisies. Durant l'étape S23 de maximisation conditionnelle effectuée pour chaque groupe k = 1, ..., K, les estimations $t_{i,k}^*$ et $s_{i,k}^*$ sont évaluées à l'aide des équations (4) et (5) appliqués aux paramètres du modèle $u_{(n)}$ déterminés précédemment. Durant l'étape S23, l'unité de traitement CU calcule également un rapport d'accumulation ac en utilisant l'équation suivante :

$$ac = \frac{n_{k(n)}\sum_{j=1}^{d_k}\alpha_{kj}+\frac{w_{k(n)}w_k^*}{w_{k(n)}+w_k^*}\left\|Q_{k(n)}^T W^{1/2}(q_{k(n)}-q_k^*)\right\|^2+\sum_{j=1}^{n^*}w_{jk}^*\left\|Q_{k(n)}^T W^{1/2}(c_i^*-q_k^*)\right\|^2}{n_{k(n)}\left(\sum_{j=1}^{d_k}\alpha_{kj}+(R-d_k)\beta_k\right)+\frac{w_{k(n)}w_k^*}{w_{k(n)}+w_k^*}\left\|W^{1/2}(q_{k(n)}-q_k^*)\right\|^2+\sum_{j=1}^{n^*}w_{jk}^*\left\|W^{1/2}(c_i^*-q_k^*)\right\|^2} \qquad (19)$$

avec :

$$w_{k(n)}=\sum_{i=1}^{n}t_{i,k}\left(s_{i,k}+(1-s_{i,k})/e_{k(n)}\right)$$

représentant un poids associé au modèle précédent (avant l'étape S23), associé au groupe k,

$$w_k^*=\sum_{i=1}^{n^*}t_{i,k}^*\left(s_{i,k}^*+(1-s_{i,k}^*)/e_k^*\right)$$

représentant un poids associé au groupe k, calculé en tenant compte des nouvelles mesures $x_i^*$ , et

$$q_k^* = \frac{\sum_{i=1}^{n^*} c_i^* . t_{i,k}^* (s_{i,k}^* + (1-s_{i,k}^*)/e_k)}{\sum_{i=1}^{n^*} t_{i,k}^* (s_{i,k}^* + (1-s_{i,k}^*)/e_k^*)}$$

représentant la moyenne des mesures du groupe k, incluant les nouvelles mesures.

A l'étape S24, l'unité de traitement CU compare le rapport d'accumulation ac aux seuils $th_k$. Pour chaque groupe k, si le rapport d'accumulation ac est supérieur au seuil $th_k$, les paramètres du modèle $u_{(m+n^*)}$ sont calculés à l'étape S25, sinon ils sont calculés à l'étape S26.

Les paramètres $p_{k(n+n^*)}$, $a_{k(n+n^*)}$, $q_{k(n+n^*)}$, $Q_{k(n+n^*)}$, $\alpha_{k(n+n^*)}$, $\beta_{k(n+n^*)}$, $e_{k(n+n^*)}$, et les estimations de probabilités $t_{i,k(n+n^*)}$, $s_{i,k(n+n^*)}$ mis à jour du modèle comprennent pour chaque groupe homogène (k) :

un paramètre $p_{k(n+n^*)}$ représentant une proportion de précédents et de nouveaux signaux de pesée $x_{i,1}$-$x_{i,p}$, $x^*_{i,1}$-$x^*_{i,p}$ appartenant au groupe homogène, et calculé par une moyenne pondérée du paramètre précédent ($p_{k(m)}$) correspondant et d'un nombre de nouveaux signaux appartenant au groupe homogène,

un paramètre $a_{k(n+n^*)}$ représentant une proportion de précédents et de nouveaux signaux de pesée normaux dans le groupe homogène, et calculé par une moyenne pondérée du paramètre précédent $a_{k(n)}$ correspondant et du nombre de nouveaux signaux normaux appartenant au groupe homogène,

un paramètre $q_{k(n+n^*)}$ représentant une moyenne des précédents et nouveaux signaux de pesée d'une distribution gaussienne du groupe homogène, et calculé par une moyenne pondérée du paramètre précédent ($q_{k(n)}$) correspondant et une moyenne des nouveaux signaux appartenant au groupe homogène,

une matrice $Q_{k(n+n^*)}$ de vecteurs formés par des coefficients de fonctions propres, la matrice étant estimée par une multiplication d'une matrice de rotation par la matrice précédente $Q_{k(n)}$ si les nouveaux signaux de pesées sont bien représentés dans le sous-espace fonctionnel, ou sinon estimée par une multiplication de la matrice de rotation par une matrice constituée d'une concaténation de la matrice précédente correspondante $Q_{k(n)}$ et d'une matrice constituée d'erreurs de projection des nouveaux coefficients dans le sous espace fonctionnel,

une variance matricielle $[\alpha_{k,j(n+n^*)}, \beta_{k(n+n^*)}]$ ayant la forme d'une matrice diagonale rassemblant de nouvelles valeurs propres $\alpha_{k,j(n+n^*)}$ du groupe homogène, obtenues à partir de la variance matricielle précédente, de la matrice précédente $Q_{k(n)}$ des coefficients des fonctions propres, des nouveaux coefficients $c_i^*$ et de la moyenne des signaux de pesée normaux, et des éléments $\beta_{k(n+n^*)}$ obtenus à partir d'une valeur moyenne de la différence entre la somme des éléments de la variance matricielle $[\alpha_{k,j(n)}, \beta_{k(n)}]$ précédente et la somme des nouvelles valeurs propres $\alpha_{k,j(n+n^*)}$, et

un paramètre $e_k$ représentant un facteur d'inflation de la matrice de covariance du groupe homogène k, calculé par une moyenne pondérée du paramètre précédent $e_{k(n)}$ correspondant et d'un facteur d'inflation des nouveaux signaux de pesée calculé à partir d'opérateurs de projection.

Ainsi, aux étapes S25 et S26, les paramètres $p_{k(n+n^*)}$, $a_{k(n+n^*)}$, $q_{k(n+n^*)}$ de l'ensemble de paramètres $u_{1(n+n^*)} = \{p_{k(n+n^*)}, a_{k(n+n^*)}, q_{k(n+n^*)}, \alpha_{k(n+n^*)}, \beta_{k(n+n^*)}, Q_{k(n+n^*)} / k= 1, ..., K\}$ sont estimés à l'aide des équations suivantes :

$$p_{k(n+n^*)} = \frac{np_{k(n)} + \sum_{i=1}^{n^*} t_{i,k}^*}{n+n^*} \qquad (20)$$

$$a_{k(n+n^*)} = \frac{n_{k(n)} a_{k(n)} + \sum_{i=1}^{n^*} t_{i,k}^* . s_{i,k}^*}{n_k + n_k^*} \qquad (21)$$

$$q_{k(n+n^*)} = \frac{w_{k(n)} q_{k(n)} + w_k^* q_k^*}{w_{k(n)} + w_k^*} \qquad (22)$$

avec $n_k = \sum_{i=1}^{n} t_{i,k}$ $t_{i,k}$ représentant le nombre de mesures précédentes appartenant au groupe k, $n_k^* = \sum_{i=1}^{n^*} t_{i,k}^*$ représentant le nombre de nouvelles mesures ajoutées au groupe k.

Si le rapport d'accumulation ac est inférieur au seuil $th_k$ (étape S25), alors les nouveaux signaux de pesées ne sont pas bien représentés dans le sous-espace fonctionnel ($SE_k$). Dans ce cas, la matrice $Q_{k(n+n^*)}$ peut être estimée en considérant qu'elle résulte d'une rotation $R_k$ d'une matrice constituée d'une concaténation de la matrice de covariance précédente $Q_{k(n)}$ et d'une matrice $H3_k$, selon l'équation suivante :

$$Q_k(n+n^*) = [Q_k(n), H3_k]R_k \tag{23}$$

dans laquelle $H3_k = [\tilde{h}_{k,1}, \tilde{h}_{k,2},..., \tilde{h}_{k,l_k}]$, avec $1 \leq l_k \leq n_k^*$, $l_k$ étant le nombre de dimensions ajoutées au groupe k, $n_k^*$ étant le nombre de mesures des $n^*$ nouvelles mesures ajoutées au groupe k, et

$$\tilde{h}_{k,j}= \frac{h_{k,j}}{\|h_{k,j}\|}, \text{ avec } 1 \leq j \leq l_k, \text{ et } h_{k,i} = t_{i,k}^*(c_i^* - q_{k(n)}) - (Q_{k(n)})(Q_{k(n)})^T t_{i,k}^*(c_i^* - q_{k(n)}).$$

La rotation $R_K$ est définie par la matrice des vecteurs propres obtenus en faisant une décomposition en valeurs propres de la matrice suivante :

$$\frac{n_{k(n)}}{n_{k(n)}+n_k^*}\begin{pmatrix} A_{k(n)} & d_k,l_k 0 \\ l_k,d_k 0^T & d_k,d_k 0 \end{pmatrix} + \frac{w_k^{*2}w_{k(n)}}{(n_{k(n)}+n_k^*)(w_k^*+w_{k(n)})^2}\begin{pmatrix} g1g1^T & g1g2^T \\ g2g1^T & g2g2^T \end{pmatrix}$$
$$+ \frac{w_{k(n)}^2}{(n_{k(n)}+n_k^*)(w_k^*+w_{k(n)})^2}\begin{pmatrix} \sum_{i=1}^{n^*} g3_i g3_i^T & \sum_{i=1}^{n^*} g3_i g4_i^T \\ \sum_{i=1}^{n^*} g4_i g3_i^T & \sum_{i=1}^{n^*} g4_i g4_i^T \end{pmatrix}$$
$$+ \frac{w_k^{*2}+2w_{k(n)}w_k^*}{(n_{k(n)}+n_k^*)(w_k^*+w_{k(n)})^2}\begin{pmatrix} \sum_{i=1}^{n^*} g5_i g5_i^T & \sum_{i=1}^{n^*} g5_i g6_i^T \\ \sum_{i=1}^{n^*} g6_i g5_i^T & \sum_{i=1}^{n^*} g6_i g6_i^T \end{pmatrix} \tag{24}$$

dans laquelle :

$$g1=(W^{1/2}Q_{k(n)})^T \left( q_k^*-q_{k(n)} \right),$$

$$g2=(W^{1/2}H3_k)^T \left( q_k^*-q_{k(n)} \right),$$

$$g3_i=\sqrt{t_{i,k}^*(s_{i,k}^*+(1-s_{i,k}^*)/e_k)}(W^{1/2}Q_{k(n)})^T \left( c_i^*-q_{k(n)} \right)$$

$$g4_i=\sqrt{t_{i,k}^*(s_{i,k}^*+(1-s_{i,k}^*)/e_k)}(W^{1/2}H3_k)^T \left( c_i^*-q_{k(n)} \right)$$

$$g5_i=\sqrt{t_{i,k}^*(s_{i,k}^*+(1-s_{i,k}^*)/e_k)}(W^{1/2}Q_{k(n)})^T \left( c_i^*-q_k^* \right)$$

$$g6_i=\sqrt{t_{i,k}^*(s_{i,k}^*+(1-s_{i,k}^*)/e_k)}(W^{1/2}H3_k)^T \left( c_i^*-q_k^* \right)$$

Le paramètre $\alpha_{k(n+n^*)}$ est estimé par les valeurs propres de la matrice de l'équation (24) et le paramètre $\beta_{k(n+n^*)}$ est estimé de la manière suivante :

$$\beta_{k,i(n+n^*)} = \frac{1}{p-d_k-l_k} \left[ tr(A_{k(n)}) - tr(G_{k(n+n^*)}) \right] \tag{25}$$

dans laquelle $G_{k(n+n^*)}$ est la matrice diagonale de dimension $(d_k + l_k)$ dont les éléments de la diagonale sont les valeurs propres $\alpha_{k(n+n^*)}$, et $l_k$ est le nombre de vecteurs de dimension p qui sont ajoutés aux $d_k$ précédents vecteurs du groupe k pour éviter une perte d'informations, et $l_k$ représente également le nombre de fonctions propres ajoutées au groupe k.

Si le rapport d'accumulation ac est supérieur ou égal au seuil $th_k$ (étape S26), alors les nouveaux signaux de pesées sont bien représentés dans le sous-espace fonctionnel $SE_k$ et aucune nouvelle dimension n'est ajoutée. Dans ce cas, la matrice $Q_{k(n+n^*)}$ peut être estimée en considérant qu'elle résulte d'une rotation $R_k$ de la matrice de covariance précédente $Q_{k(n)}$ selon l'équation suivante :

$$Q_k(n+n^*) = [Q_{k(n)}]R_k, \qquad (26)$$

La rotation $R_K$ est alors définie par la matrice des vecteurs propres obtenus en faisant une décomposition en valeurs propres de la matrice suivante :

$$\frac{n_{k(n)}}{n_{k(n)}+n_k^*}A_{k(n)} + \frac{w_k^{*2}w_{k(n)}}{(n_{k(n)}+n_k^*)(w_k^*+w_{k(n)})^2}g1g1^T$$
$$+ \frac{w_{k(n)}^2}{(n_{k(n)}+n_k^*)(w_k^*+w_{k(n)})^2}\sum_{i=1}^{n^*} g3_ig3_i^T + \frac{w_k^{*2}+2w_{k(n)}w_k^*}{(n_{k(n)}+n_k^*)(w_k^*+w_{k(n)})^2}\sum_{i=1}^{n^*} g5_ig5_i^T \qquad (27)$$

Le paramètre $\alpha_{k(n+n^*)}$ est estimé par les valeurs propres de la matrice de l'équation (27) et le paramètre $\beta_{k(n+n^*)}$ est estimé de la manière suivante :

$$\beta_{k,i(n+n^*)} = \frac{1}{p-d_k}\left[tr(A_{k(n)}) - tr(G_{k(n+n^*)})\right] \qquad (28)$$

L'étape S27 de seconde maximisation conditionnelle est exécutée à la suite de l'une ou l'autre des étapes S25 et S26. Durant l'étape S27 effectuée pour chaque groupe k = 1, ..., K, le paramètre $e_{k(n+n^*)}$ est calculé à l'aide de l'équation suivante :

$$e_{k(n+n^*)} = \max\left[1,\tilde{e}_{k(n+n^*)}\right] \qquad (29)$$

avec :

$$\tilde{e}_{k(n+n^*)} = e_{k(n)}\frac{\sum_{i=1}^{n} t_{i,k(n)}(1-s_{i,k(n)})}{\sum_{i=1}^{n} t_{i,k(n)}(1-s_{i,k(n)})+\sum_{i=1}^{n^*} t_{i,k}^*(1-s_{i,k}^*)} + \frac{\sum_{i=1}^{n^*} t_{i,k}^*(1-s_{i,k}^*)(c_i^*-q_{k(n+n^*)})^T h_{k(n+n^*)}^{-1}(c_i^*-q_{k(n+n^*)})}{B\left(\sum_{i=1}^{n} t_{i,k(n)}(1-s_{i,k(n)})+\sum_{i=1}^{n^*} t_{i,k}^*(1-s_{i,k}^*)\right)} \qquad (30)$$

$t_{i,k}^*$ et $st_{i,k}^*$ étant ceux calculés à l'étape S23, et $t_{i,k(n)}$ et $s_{i,k(n)}$ étant les valeurs estimées avant l'exécution de la procédure de la figure 6.

Dans l'application à la pesée d'un véhicule, le véhicule avançant sur le pont-bascule 1, chaque essieu du véhicule sollicite en même temps la paire de capteurs d'entrée (C1, C2), puis la paire de capteurs de sortie (C3, C4). Les signaux issus des capteurs de chaque paire C1, C2), (C3, C4), sont donc fortement corrélés. De même, chaque roue du véhicule avançant sur le pont 1 va solliciter successivement les capteurs C1 et C3 ou C2 et C4, d'un même côté du pont 1, avec un décalage temporel Dt = D/V, D étant la distance entre les capteurs C1 et C3 ou C2 et C4, et V étant la vitesse de déplacement du véhicule sur le pont 1. Les signaux issus des paires de capteurs (C1, C3) et (C2, C4) sont également fortement corrélés, au temps Dt près. Il en résulte que par comparaison avec une application où les signaux à traiter sont totalement non corrélés entre eux, les nombres de fonctions de base f(·) pour modéliser les signaux issus des capteurs C1-C4 sont nécessairement plus réduits. Il en est de même du nombre K de groupes, ce qui implique une réduction du nombre d'itérations dans les calculs décrits précédemment.

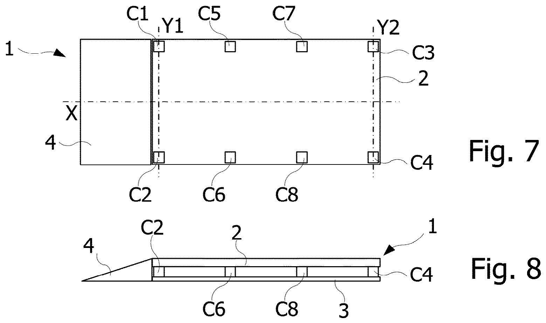

Il apparaîtra clairement à l'homme de l'art que la présente invention est susceptible de diverses variantes de réalisation et diverses applications. En particulier, l'invention n'est pas limitée à un pont-bascule comportant seulement une paire de capteurs d'entrée C1, C2 et une paire de capteurs de sortie C3, C4. En effet, un pont peut comporter plus de 4 capteurs. Dans l'exemple des figures 7 et 8, le pont-bascule comporte huit capteurs C1-C8. Les capteurs C5 et C7 sont alignés avec les capteurs C1 et C3 le long d'un bord transversal du pont 1, et les capteurs C6 et C8 sont alignés avec les capteurs C2 et C4 le long de l'autre bord transversal du pont. Les capteurs C5, C6, C7, C8, sont appelés des capteurs intermédiaires. A noter que le nombre de capteurs sur un pont-bascule n'est en théorie pas limité et qu'il n'est pas nécessaire que les nombres de capteurs de chaque côté du pont soient identiques. Il n'est pas non plus nécessaire que les capteurs soient alignés exclusivement sur les côtés transversaux. Il peut ainsi être prévu d'aligner des capteurs le long de l'axe longitudinal X du pont-bascule.

Selon un mode de réalisation, les capteurs d'entrée C1, C2 sont alignés suivant un axe transversal Y1 perpendiculaire à la direction longitudinale X de traversée du pont 1. De même, les capteurs de sortie C3, C4 sont alignés suivant un axe transversal Y2 perpendiculaire à la direction longitudinale X.

Dans le mode de réalisation illustré par les figures 7 et 8, les capteurs C5 et C6 d'une part et d'autre part, les capteurs C7 et C8 peuvent être alignés suivant des directions parallèles aux axes Y1 et Y2.

Par ailleurs, l'invention n'est pas limitée à une méthode particulière de calcul du poids du véhicule à partir des signaux xi(t) fournis par les capteurs Ci. Pour des raisons de sécurité par exemple, le poids de chaque essieu du véhicule peut également être estimé et contrôlé séparément en identifiant le passage de chaque roue du véhicule dans les signaux xi(t) issus des capteurs Ci, en calculant une valeur moyenne des valeurs maximum des signaux xi issus des capteurs Ci pour chaque roue, et en additionnant les valeurs moyennes pour chaque roue.

Dans le cas d'un véhicule ferroviaire, dont la position latérale est déterminée par le guidage des rails, les valeurs d'équilibrage droite/gauche du véhicule peuvent aussi être mesurées par ce même procédé.

Documents cités

1. "Outlier Detection in Multivariate Functional Data Through a Contaminated Mixture Model", M. Amovin-Assagba, I. Gannaz, J. Jacques, Computational Statistics and Data Analysis, 174:107496 (2022),
2. CN 203 643 013 U

**Revendications**

1. Procédé de pesée d'un véhicule monté sur roues, comprenant des étapes consistant à :

   déplacer le véhicule sur un pont-bascule (1) de manière à ce qu'un premier train de roues du véhicule sollicite simultanément des capteurs d'entrée (C1, C2) du pont-bascule, puis simultanément des capteurs de sortie (C3, C4) du pont-bascule ;
   acquérir et échantillonner, par une unité de traitement (CU), des signaux de pesée ($x_{i,1}$,-$x_{i,p}$) issus des capteurs d'entrée et de sortie, pendant que le véhicule traverse le pont-bascule ;
   **caractérisé par** les étapes suivantes:

   exécuter par l'unité de traitement une pluralité d'itérations (m) d'un algorithme d'espérance-maximisation, chaque itération comprenant le calcul de paramètres ($P_{k(m+1)}$, $a_{k(m+1)}$, $q_{k(m+1)}$, $Q_{k(m+1)}$, $\alpha_{k(m+1),j}$, $\beta_{k(m+1)}$, $e_{k(m+1)}$) d'un modèle à l'aide d'une analyse en composantes principales fonctionnelles multivariée, et le calcul d'estimations de probabilités ($t_{i,k(m+1)}$, $s_{i,k(m+1)}$), le modèle étant basé sur une approximation de chacun des signaux de pesée par une combinaison linéaire de fonctions de base de type carré intégrable pondérées par des coefficients ($c_i$), les estimations de probabilités calculées du modèle comprenant pour chaque signal de pesée une probabilité ($t_{i,k(m+1)}$) que le signal de pesée appartienne à un groupe homogène (k) de signaux de pesée donné parmi plusieurs groupes homogènes, et une probabilité ($s_{i,k(m+1)}$) que le signal de pesée présente ou non une anomalie,
   dans lequel les estimations de probabilités ($t_{i,k}$, $s_{i,k}$) sont obtenues en considérant seulement des coefficients de fonctions propres ayant une incidence supérieure à une valeur de seuil sur les résultats et en utilisant un opérateur de projection des coefficients des fonctions propres dans des sous-espace fonctionnels ($SE_k$), chaque sous-espace fonctionnel étant défini pour un groupe homogène respectif des groupes homogènes, les coefficients des fonctions propres étant obtenus à partir de l'analyse en composantes principales fonctionnelles multivariée.

2. Procédé selon la revendication 1, dans lequel chaque itération (m) de la pluralité d'itérations est basée sur l'exécution d'un algorithme d'espérance-maximisation comprenant :

   une étape d'espérance comprenant le calcul des estimations de probabilités ($t_{i,k}$, $s_{i,k}$),

une première étape de maximisation comprenant le calcul d'estimations des paramètres ($p_{k(m)}$, $a_{k(m)}$, $q_{k(m)}$, $Q_{k(m)}$, $\alpha_{k,j}$, $\beta_k$) du modèle à l'aide d'une analyse en composantes principales fonctionnelles multivariée, permettant de définir pour chaque groupe homogène (k) une variance matricielle dans un sous-espace fonctionnel ($SE_k$) défini par des fonctions propres, la variance matricielle étant modélisée de façon parcimonieuse par des éléments formés de plus grandes valeurs propres ($\alpha_{k,j}$) du groupe homogène et des éléments considérés comme un bruit et tous égaux à l'un des paramètres ($\beta_k$) du modèle, et
une seconde étape de maximisation comprenant le calcul d'un facteur d'inflation ($e_k$).

3. Procédé selon l'une des revendications 1 à 2, dans lequel :

chaque probabilité ($t_{i,k(m+1)}$) que l'un des signaux de pesée appartienne à l'un des groupes homogènes (k) est obtenue en calculant le rapport entre une densité gaussienne contaminée du groupe homogène et une somme des densités gaussiennes contaminées de tous les groupes homogènes, en tenant compte des coefficients ($c_i$), la densité gaussienne contaminée de chacun des groupes homogènes étant calculée par la somme pondérée d'une première densité gaussienne de chacun des signaux normaux et d'une seconde densité gaussienne de chacun des signaux anormaux dans chaque groupe homogène, une matrice de covariance de la densité gaussienne des signaux anormaux étant égale à une matrice de covariance de la densité gaussienne des signaux normaux multipliée par un facteur d'inflation ($e_k$), chacune des première et seconde densités gaussiennes étant calculée par la somme d'une norme de projection des coefficients du modèle dans un sous-espace fonctionnel ($SE_k$) défini pour le groupe homogène, d'une norme d'une différence entre les coefficients et la projection des coefficients dans le sous-espace fonctionnel défini pour le groupe homogène et un terme dépendant de valeurs propres de la matrice de covariance, et
chaque probabilité ($s_{i,k}$) que l'un des signaux de pesée de l'un des groupes homogènes (k) présente ou non une anomalie est égale au rapport entre la densité gaussienne des signaux normaux du groupe homogène et la densité gaussienne contaminée du groupe homogène, toutes deux étant calculées avec les coefficients ($c_i$).

4. Procédé selon l'une des revendications 1 à 3, comprenant une étape d'initialisation des paramètres ($p_{k(m)}$, $a_{k(m)}$, $q_{k(m)}$, $Q_{k(m)}$, $\alpha_{k(m),j}$, $\beta_{k(m)}$, $e_{k(m)}$) et des estimations de probabilités ($t_{i,k(m)}$, $s_{i,k(m)}$) du modèle, de manière aléatoire ou bien en utilisant des algorithmes reposant sur une minimisation d'une somme calculée pour chaque groupe homogène (k) de distances entre chaque coefficient ($c_i$) et un centroïde du groupe homogène.

5. Procédé selon l'une des revendications 1 à 4, dans lequel une nouvelle itération est exécutée si une variable d'erreur (ERR) portant sur les paramètres calculés ($p_{k(m+1)}$, $a_{k(m+1)}$, $q_{k(m+1)}$, $Q_{k(m+1)}$, $\alpha_{k(m+1)}$, $\beta_{k(m+1)}$, $e_{k(m+1)}$) et les estimations de probabilités ($t_{i,k(m+1)}$, $s_{i,k(m+1)}$) est supérieure à une valeur de seuil ($\varepsilon$) et si un nombre maximum d'itérations (MX) n'est pas atteint.

6. Procédé selon l'une des revendications 1 à 5, dans lequel les paramètres ($p_{k(m+1)}$, $a_{k(m+1)}$, $q_{k(m+1)}$, $Q_{k(m+1)}$, $\alpha_{k(m+1)}$, $\beta_{k(m+1)}$, $e_{k(m+1)}$,) calculés du modèle comprennent pour chaque groupe homogène (k) de signaux de pesée :

un paramètre ($p_k$) représentant une proportion de signaux de pesée ($x_{i,1}$,-$x_{i,p}$) appartenant au groupe homogène,
un paramètre ($a_k$) représentant une proportion de signaux de pesée normaux dans le groupe homogène,
un paramètre ($q_k$) représentant une moyenne d'une distribution gaussienne de du groupe homogène,
une matrice ($Q_k$) rassemblant des coefficients d'un ensemble de fonctions propres du groupe homogène, les coefficients des fonctions propres étant obtenus à partir de l'analyse en composantes principales fonctionnelles multivariée, et
une variance matricielle ($\alpha_{k,j}$, $\beta_k$) ayant la forme d'une matrice diagonale rassemblant des valeurs propres du groupe homogène, obtenues à partir d'une analyse en composantes principales fonctionnelles multivariée, la variance matricielle comprenant des premières plus grandes valeurs ($\alpha_{k,j}$) des valeurs propres et des éléments égaux à une valeur moyenne ($\beta_k$) des plus petites valeurs des valeurs propres, et
un paramètre ($e_k$) représentant un facteur d'inflation de la matrice de covariance du groupe homogène, calculé en utilisant des opérateurs de projection.

7. Procédé selon l'une des revendications 1 à 6, comprenant des étapes d'acquisition de nouveaux signaux de pesée ($xi^*$), de calcul de nouveaux coefficients ($c^*_i$) obtenus en approximant chacun des nouveaux signaux de pesée par une combinaison linéaire des fonctions de base pondérées par des nouveaux coefficients ($c^*_i$), et de mise à jour des paramètres ($p_{k(n+n^*)}$, $a_{k(n+n^*)}$, $q_{k(n+n^*)}$, $Q_{k(n+n^*)}$, $\alpha_{k(n+n^*)}$, $\beta_{k(n+n^*)}$, $e_{k(n+n^*)}$) et des estimations de probabilités ($t_{i,k(n+n^*)}$, $s_{i,k(n+n^*)}$) du modèle en une itération, la probabilité ($t^*_{i,k}$) que l'un des nouveaux signaux de pesée ($x^*_i$) appartienne à un groupe homogène de signaux de pesée et la probabilité ($s^*_{i,k}$) que l'un des nouveaux signaux de pesée présente ou non une anomalie, étant estimées en utilisant des opérateurs de projection pour projeter les nouveaux coefficients dans les sous-espaces fonctionnels ($SE_k$) définis à partir de paramètres du modèle précédemment calculés ($p_{k(m+1)}$, $a_{k(m+1)}$, $q_{k(m+1)}$, $Q_{k(m+1)}$, $\alpha_{k(m+1),j}$, $\beta_{k(m+1)}$, $e_{k(m+1)}$, ti,k(m+1), Si,k(m+1)).

8. Procédé selon la revendication 7, dans lequel les paramètres ($p_{k(n+n^*)}$, $a_{k(n+n^*)}$, $q_{k(n+n^*)}$, $Q_{k(n+n^*)}$, $\alpha_{k(n+n^*)}$, $\beta_{(n+n^*)}$, $e_{k(n+n^*)}$) mis à jour du modèle comprennent pour chaque groupe homogène (k) :

   un paramètre ($p_{k(n+n^*)}$) représentant une proportion de précédents et de nouveaux signaux de pesée ($x_{i,1}$-$x_{i,p}$, $x^*_{i,1}$-$x^*_{i,p}$) appartenant au groupe homogène, et calculé par une moyenne pondérée d'un paramètre précédent ($p_{k(n)}$) correspondant et d'un nombre de nouveaux signaux appartenant au groupe homogène,
   un paramètre ($a_{k(n+n^*)}$) représentant une proportion de précédents et de nouveaux signaux de pesée normaux dans le groupe homogène, et calculé par une moyenne pondérée d'un paramètre précédent ($a_{k(n)}$) correspondant et du nombre de nouveaux signaux normaux appartenant au groupe homogène,
   un paramètre ($q_{k(n+n^*)}$) représentant une moyenne des précédents et nouveaux signaux de pesée d'une distribution gaussienne du groupe homogène, et calculé par une moyenne pondérée d'un paramètre précédent ($q_{k(n)}$) correspondant et une moyenne des nouveaux signaux appartenant au groupe homogène,
   une matrice ($Q_{k(n+n^*)}$) de vecteurs formés par des coefficients de fonctions propres, la matrice étant estimée par une multiplication d'une matrice de rotation par une matrice précédente ($Q_{k(n)}$) correspondante si les nouveaux signaux de pesées sont représentés dans le sous-espace fonctionnel (SEk), ou sinon estimée par une multiplication de la matrice de rotation par une matrice constituée d'une concaténation de la matrice précédente correspondante et d'une matrice constituée d'erreurs de projection des nouveaux coefficients dans le sous espace fonctionnel,
   une variance matricielle ($\alpha_{k,j(n+n^*)}$, $\beta_{k(n+n^*)}$) ayant la forme d'une matrice diagonale rassemblant de nouvelles valeurs propres ($\alpha_{k,j(n+n^*)}$) du groupe homogène, obtenues à partir d'une variance matricielle précédente, de la matrice de vecteurs précédente ($Q_{k(n)}$), des nouveaux coefficients ($c_i^*$) et de la moyenne des signaux de pesée normaux, et d'éléments ($\beta_{k(n+n^*3)}$) obtenus à partir d'une valeur moyenne de la différence entre la somme des éléments de la variance matricielle ($\alpha_{k,j(n)}$, $\beta_{k(n)}$) précédente et la somme des nouvelles valeurs propres ($\alpha_{k,j(n+n^*)}$), et
   un paramètre ($e_k$) représentant un facteur d'inflation de la matrice de covariance du groupe homogène, calculé par une moyenne pondérée d'un paramètre précédent ($e_{k(n)}$) correspondant et d'un facteur d'inflation des nouveaux signaux de pesée calculé à partir d'opérateurs de projection.

9. Procédé selon l'une des revendications 1 à 8, comprenant des étapes d'acquisition et d'échantillonnage, par l'unité de traitement (CU) de signaux de pesée ($x_{i,1}$,-$x_{i,p}$) issus de capteurs intermédiaires (C5-C8) installés sur le pont-bascule (1) entre les capteurs d'entrée et de sortie (C1-C4).

10. Système de pesée d'un véhicule monté sur roues, comprenant :

   un pont-bascule (1) comprenant des capteurs d'entrée disposés de manière à être sollicités simultanément par un premier train de roues du véhicule, et des capteurs de sortie disposés de manière à être sollicités simultanément par le premier train de roues du véhicule, lorsque le véhicule traverse le pont-bascule,
   une unité de traitement (CU) configurée pour acquérir et échantillonner des signaux de pesée ($x_{i,1}$,-$x_{i,p}$) issus des capteurs d'entrée et de sortie et exécuter une pluralité d'itérations (m) de calcul de paramètres ($p_{k(m+1)}$, $a_{k(m+1)}$, $q_{k(m+1)}$, $Q_{k(m+1)}$, $\alpha_{k(m+1)}$, $\beta_{k(m+1)}$, $e_{k(m+1)}$) et des estimations de probabilités ($t_{i,k(m+1)}$, $s_{i,k(m+1)}$) d'un modèle, conformément au procédé selon l'une des revendications 1 à 9.

11. Système selon la revendication 10, dans lequel les capteurs (C1, C3 - C2, C4) sont alignés le long de bords latéraux du pont-bascule (1).

12. Système selon la revendication 10 ou 11, comprenant au moins trois capteurs (C1, C3, C5, C7) alignés le long d'un bord latéral du pont-bascule (1).

13. Système selon l'une des revendications 10 à 12, dans lequel les capteurs (C1-C4, C1-C8) sont disposés de manière à être alignés le long d'axes (Y1, Y2) perpendiculaires à une direction longitudinale (X) du pont-bascule (1).

**Patentansprüche**

1. Verfahren zum Wiegen eines auf Rädern montierten Fahrzeugs, das folgende Schritte umfasst:

    Bewegen des Fahrzeuges auf einer Waage (1), so dass ein erster Radsatz des Fahrzeugs gleichzeitig die Eingangssensoren (C1, C2) der Waage und dann gleichzeitig die Ausgangssensoren (C3, C4) der Waage beansprucht;
    Erfassen und Abtasten von Wiegesignalen ($x_{i,1}$-$x_{i,p}$) von den Eingangs- und Ausgangssensoren durch eine Verarbeitungseinheit (CU), während das Fahrzeug die Waage passiert;
    **gekennzeichnet durch** die folgenden Schritte:

    Ausführen einer Vielzahl von Iterationen (m) eines Erwartungsmaximierungsalgorithmus durch die Verarbeitungseinheit, wobei jede Iteration die Berechnung von Parametern ($p_{k(m+1)}$, $a_{k(m+1)}$, $q_{k(m+1)}$, $Q_{k(m+1)}$, $\alpha_{k(m+1),j}$, $\beta_{k(m+1)}$, $e_{k(m+1)}$) eines Modells unter Verwendung einer multivariaten Analyse der funktionalen Hauptkomponenten, und die Berechnung von Wahrscheinlichkeitsschätzungen ($t_{i,k(m+1)}$, $s_{i,k(m+1)}$) umfasst, wobei das Modell auf einer Annäherung jedes Wiegesignals durch eine lineare Kombination von durch Koeffizienten gewichteten integrierbaren quadratischen Grundfunktionen ($c_i$) basiert, wobei die berechneten Wahrscheinlichkeitsschätzungen des Modells für jedes Wiegesignal eine Wahrscheinlichkeit ($t_{i,k(m+1)}$) umfassen, dass das Wiegesignal zu einer bestimmten homogenen Gruppe (k) von Wiegesignalen aus mehreren homogenen Gruppen gehört, und eine Wahrscheinlichkeit ($s_{i,k(m+1)}$) ob das Wiegesignal fehlerhaft ist oder nicht,
    wobei die Wahrscheinlichkeitsschätzungen ($t_{i,k}$, $s_{i,k}$) nur unter Berücksichtigung von Eigenfunktionskoeffizienten, die einen größeren Einfluss als einen Schwellenwert auf die Ergebnisse haben, und unter Verwendung eines Operators zur Projektion der Eigenfunktionskoeffizienten in funktionale Teilbereiche ($SE_k$) erzielt werden, wobei jeder funktionale Teilbereich für eine jeweilige homogene Gruppe der homogenen Gruppen definiert ist; die Eigenfunktionskoeffizienten werden aus der multivariaten Analyse der funktionalen Hauptkomponenten ermittelt.

2. Verfahren nach Anspruch 1, wobei jede Iteration (m) der Vielzahl von Iterationen auf der Ausführung eines Erwartungsmaximierungsalgorithmus basiert, der Folgendes umfasst:

    einen Erwartungsschritt, der die Berechnung der Wahrscheinlichkeitsschätzungen ($t_{i,k}$, $s_{i,k}$,) umfasst,
    einen ersten Maximierungsschritt, der die Berechnung von Schätzungen der Parameter ($p_{k(m)}$, $a_{k(m)}$, $q_{k(m)}$, $Q_{k(m)}$, $\alpha_{k,j}$, $\beta_k$) des Modells unter Verwendung einer multivariaten Analyse der funktionalen Hauptkomponenten umfasst, die es ermöglicht, für jede homogene Gruppe (k) eine Matrixvarianz in einem funktionalen Unterraum ($SE_k$) zu definieren
    definiert durch eigene Funktionen, wobei die Matrixvarianz sparsam durch Elemente modelliert wird, die aus größeren Eigenwerten ($\alpha_{k,j}$) der homogenen Gruppe und Elementen bestehen, die als Geräusch betrachtet werden und allen gleich einem der Parameter ($\beta_k$) des Modells sind, und
    einen zweiten Maximierungsschritt, der die Berechnung eines Inflationsfaktors ($e_k$) umfasst.

3. Verfahren nach einem der Ansprüche 1 bis 2, wobei:

    jede Wahrscheinlichkeit ($t_{i,k(m+1)}$), dass eines der Wiegesignale zu einer der homogenen Gruppen (k) gehört, durch Berechnung des Verhältnisses zwischen einer kontaminierten Gaußdichte der homogenen Gruppe und einer Summe der kontaminierten Gaußdichten aller homogenen Gruppen unter Berücksichtigung der Koeffizienten ($c_i$) ermittelt wird, wobei die kontaminierte Gaußdichte jeder der homogenen Gruppen durch die gewichtete Summe einer ersten Gaußdichte jedes normalen Signals und einer zweiten Gaußdichte jedes anormalen Signals in jeder homogenen Gruppe berechnet wird, wobei eine Kovarianzmatrix der Gaußdichte der anormalen Signale gleich einer Kovarianzmatrix der Gaußdichte der normalen Signale multipliziert mit einem Inflationsfaktor ($e_k$) ist, wobei jede der ersten und zweiten Gaußdichten durch die Summe eines Standards für die Projektion der Koeffizienten des Modells in einen für die homogene Gruppe definierten funktionalen Unterraum ($SE_k$), eines Standards für eine Differenz zwischen den Koeffizienten und der Projektion der Koeffizienten in den für die homogene Gruppe definierten funktionalen Unterraum und eines von den Werten der Kovarianzmatrix abhängigen Begriffs berechnet wird, und
    Jede Wahrscheinlichkeit ($s_{i,k}$), dass eines der Wiegesignale einer der homogenen Gruppen (k) eine Abweichung aufweist oder nicht, gleich dem Verhältnis zwischen der Gaußdichte der normalen Signale der homogenen Gruppe und der kontaminierten Gaußdichte der homogenen Gruppe ist, die beide mit den Koeffizienten ($c_i$)

berechnet werden.

4. Verfahren nach einem der Ansprüche 1 bis 3, umfassend einen Schritt zur Initialisierung der Parameter ($P_{k(m)}$, $a_{k(m)}$, $q_{k(m)}$, $Q_{k(m)}$, $\alpha_{k(m),j}$, $\beta_{k(m)}$, $e_{k(m)}$) und Wahrscheinlichkeitsschätzungen ($t_{i,k(m)}$, $s_{i,k(m)}$) des Modells zufällig oder mithilfe von Algorithmen, die auf einer Minimierung einer Summe basieren, die für jede homogene Gruppe (k) von Abständen zwischen jedem Koeffizienten ($c_i$) und einem Schwerpunkt der homogenen Gruppe berechnet wird.

5. Verfahren nach einem der Ansprüche 1 bis 4, wobei eine neue Iteration durchgeführt wird, wenn eine Fehlervariable (ERR) bezüglich der berechneten Parameter ($p_{k(m+1)}$, $a_{k(m+1)}$, $q_{k(m+1)}$, $Q_{k(m+1)}$, $\alpha_{k(m+1)}$, $\beta_{k(m+1)}$, $e_{k(m+1)}$) und der Wahrscheinlichkeitsschätzungen ($t_{i,k(m+1)}$, $s_{i,k(m+1)}$) größer als ein Schwellenwert ($\varepsilon$) ist und wenn eine maximale Anzahl von Iterationen (MX) nicht erreicht wird.

6. Verfahren nach einem der Ansprüche 1 bis 5, wobei die aus dem Modell berechneten Parameter ($p_{k(m+1)}$, $a_{k(m+1)}$, $q_{k(m+1)}$, $Q_{k(m+1)}$, $\alpha_{k(m+1)}$, $\beta_{k(m+1)}$, $e_{k(m+1)}$) für jede homogene Gruppe (k) von Wiegesignalen Folgendes umfassen:

einen Parameter ($p_k$) für einen Anteil der Wiegesignale ($x_{i,1}$-$x_{i,p}$) der homogenen Gruppe,
einen Parameter ($a_k$) für einen Anteil normaler Wiegesignale in der homogenen Gruppe,
einen Parameter ($q_k$), der einen Mittelwert einer Gaußverteilung von der homogenen Gruppe darstellt,
eine Matrix ($Q_k$), die Koeffizienten für eine Reihe von Eigenfunktionen der homogenen Gruppe sammelt, wobei die Eigenfunktionskoeffizienten aus der multivariaten Analyse der funktionalen Hauptkomponenten gewonnen werden, und
eine Matrixvarianz ($\alpha_{k,j}$, $\beta_k$) in Form einer diagonalen Matrix, die Eigenwerte der homogenen Gruppe zusammenfasst, die aus einer multivariaten Analyse der funktionalen Hauptkomponenten gewonnen wurden, wobei die Matrixvarianz erste größere Werte ($\alpha_{k,j}$) der Eigenwerte und Elemente umfasst, die einem Mittelwert ($\beta_k$) der kleinsten Werte der Eigenwerte entsprechen, und
ein Parameter ($e_k$), der einen Inflationsfaktor der Kovarianzmatrix der homogenen Gruppe darstellt, der unter Verwendung von Projektionsoperatoren berechnet wird.

7. Verfahren nach einem der Ansprüche 1 bis 6, umfassend Schritte zur Erfassung neuer Wiegesignale (xi*), zur Berechnung neuer Koeffizienten ($c^*_i$), die durch Annäherung jedes der neuen Wiegesignale durch eine lineare Kombination der durch neue Koeffizienten gewichteten Grundfunktionen ($c^*_i$) und zur Aktualisierung der Parameter ($p_{k(n+n^*)}$, $a_{k(n+n^*)}$, $q_{k(n+n^*)}$, $Q_{k(n+n^*)}$, $\alpha_{k(n+n^*)}$, $\beta_{k(n+n^*)}$, $e_{k(n+n^*)}$) und Wahrscheinlichkeitsschätzungen ($t_{i,k(n+n^*)}$, $s_{i,k(n+n^*)}$) des Modells in einer Iteration, die Wahrscheinlichkeit ($t^*_{i,k}$) erhalten werden, dass eines der neuen Wiegesignale ($x^*_i$) zu einer homogenen Gruppe von Wiegesignalen gehört und die Wahrscheinlichkeit ($s^*_{i,k}$), dass eines der neuen Wiegesignale eine Anomalie aufweist oder nicht, die mithilfe von Projektionsoperatoren geschätzt werden, um die neuen Koeffizienten in die funktionalen Unterbereiche ($SE_k$) zu projizieren, definiert aus zuvor berechneten Modellparametern ($p_{k(m+1)}$, $a_{k(m+1)}$, $q_{k(m+1)}$, $Q_{k(m+1)}$, $\alpha_{k(m+1),j}$, $\beta_{k(m,1)}$, $e_{k(m+1)}$, $t_{i,k(m+1)}$, $Si,k(m+1)$).

8. Verfahren nach Anspruch 7, wobei die Parameter ($p_{k(n+n^*)}$, $a_{k(n+n^*)}$, $q_{k(n+n^*)}$, $Q_{k(n+n^*)}$, $\alpha_{k(n+n^*)}$, $\beta_{k(n,n^*)}$, $e_{k(n+n^*)}$) des aktualisierten Modells für jede homogene Gruppe (k) Folgendes umfassen:

einen Parameter ($p_{k(n+n^*)}$), der einen Anteil früherer und neuer Wiegesignale ($X_{i,1}$-$X_{i,p}$, $X^*_{i,1}$-$X^*_{i,p}$) darstellt, die zur homogenen Gruppe gehören, und der durch einen gewichteten Mittelwert eines entsprechenden vorherigen Parameters ($p_{k(n)}$) und einer Anzahl neuer Signale berechnet wird, die zur homogenen Gruppe gehören,
einen Parameter ($a_{k(n+n^*)}$), der einen Anteil an vorherigen und neuen normalen Wiegesignalen in der homogenen Gruppe darstellt, und berechnet durch den gewichteten Mittelwert eines entsprechenden vorherigen Parameters ($a_{k(n)}$) und der Anzahl neuer normaler Signale, die zur homogenen Gruppe gehören,
einen Parameter ($q_{k(n+n^*)}$), der einen Mittelwert der vorherigen und neuen Wiegesignale einer Gaußverteilung der homogenen Gruppe darstellt, und berechnet durch einen gewichteten Mittelwert eines entsprechenden vorherigen Parameters ($q_{k(n)}$) und einen Mittelwert der neuen Signale, die zur homogenen Gruppe gehören,
eine Matrix ($Q_{k(n+n^*)}$) von Vektoren, die durch eigene Funktionskoeffizienten gebildet werden, wobei die Matrix durch Multiplikation einer Umlaufmatrix mit einer entsprechenden vorherigen Matrix ($Q_{k(n)}$) geschätzt wird, wenn die neuen Gewichtssignale im funktionalen Unterbereich (SEk) dargestellt werden, oder andernfalls geschätzt durch Multiplikation der Umlaufmatrix mit einer Matrix, die aus einer Verkettung der entsprechenden vorherigen Matrix und einer Matrix besteht, die aus Projektionsfehlern der neuen Koeffizienten im Funktionsunterraum besteht,
eine Matrixvarianz ($\alpha_{k,j(n+n^*)}$, $\beta_{k(n+n^*)}$) in Form einer diagonalen Matrix, die neue Eigenwerte ($\alpha_{k,j(n+n^*)}$) der homogenen Gruppe zusammenfasst, die aus einer vorherigen Matrixvarianz, der vorherigen Vektormatrix

$(Q_{k(n)})$, den neuen Koeffizienten $(c_i^*)$ und dem Mittelwert der normalen Wiegesignale und Elementen $(\beta_{k(n+n^*)})$ gewonnen wurden aus einem Mittelwert der Differenz zwischen der Summe der Elemente der vorherigen Matrixvarianz $(\alpha_{k,j(n)}, \beta_{k(n)})$ und der Summe der neuen Eigenwerte $(\alpha_{k,j(n+n^*)})$, und

einen Parameter $(e_k)$ als Inflationsfaktor der Kovarianzmatrix der homogenen Gruppe, berechnet durch den gewichteten Mittelwert eines entsprechenden vorherigen Parameters $(e_{k(n)})$ und einen Inflationsfaktor der neuen Wiegesignale, berechnet aus Projektionsoperatoren.

9. Verfahren nach einem der Ansprüche 1 bis 8, das Schritte zur Erfassung und Abtastung durch die Verarbeitungseinheit (CU) von Wiegesignalen $(x_{i,1}-x_{i,p})$ von Zwischensensoren (C5-C8) umfasst, die an der Waage (1) zwischen den Eingangs- und Ausgangssensoren (C1-C4) installiert sind.

10. Wiegesystem eines auf Rädern montierten Fahrzeugs, bestehend aus:

einer Waage (1), die Eingangssensoren umfasst, die so angeordnet sind, dass sie gleichzeitig von einem ersten Radsatz des Fahrzeugs angefordert werden, und Ausgangssensoren, die so angeordnet sind, dass sie gleichzeitig von dem ersten Radsatz des Fahrzeugs angefordert werden, wenn das Fahrzeug die Waage passiert, eine Verarbeitungseinheit (CU), die so konfiguriert ist, dass sie Wiegesignale $(x_{i,1}-x_{i,p})$ von den Eingangs- und Ausgangssensoren erfasst und abtastet und eine Vielzahl von Iterationen (m) der Berechnung von Parametern $(pk(m+1), a_{k(m+1)}, q_{k(m+1)}, Q_{k(m+1)}, \alpha_{k(m+1)}, \beta_{k(m,1)}, e_{k(m+1)})$ und Wahrscheinlichkeitsschätzungen $(t_{i,k(m+1)}, s_{i,k(m+1)})$ eines Modells durchführt, nach dem Verfahren nach einem der Ansprüche 1 bis 9.

11. System nach Anspruch 10, wobei die Sensoren (C1, C3 - C2, C4) entlang der seitlichen Ränder der Waage (1) ausgerichtet sind.

12. System nach Anspruch 10 oder 11, umfassend mindestens drei Sensoren (C1, C3, C5, C7), die entlang eines seitlichen Randes der Waage (1) ausgerichtet sind.

13. System nach einem der Ansprüche 10 bis 12, wobei die Sensoren (C1-C4, C1-C8) so angeordnet sind, dass sie entlang von Achsen (Y1, Y2) senkrecht zu einer Längsrichtung (X) der Waage (1) ausgerichtet sind.

**Claims**

1. A method for weighing a wheeled vehicle, comprising steps of:

moving the vehicle onto a weighbridge (1) such that a first set of wheels of the vehicle simultaneously loads input sensors (C1, C2) of the weighbridge, then simultaneously loads output sensors (C3, C4) of the weighbridge; acquiring and sampling, by a processing unit (CU), weighing signals $(x_{i,1}-x_{i,p})$ from the input and output sensors, while the vehicle crosses the weighbridge;
**characterized by** the following steps:

executing by the processing unit a plurality of iterations (m) of an expectation-maximization algorithm, each iteration comprising the calculation of parameters $(p_{k(m+1)}, a_{k(m+1)}, q_{k(m+1)}, Q_{k(m+1)}, \alpha_{k(m+1),j}, \beta_{k(m+1)}, e_{k(m+1)})$ of a model using a multivariate functional principal component analysis, and the calculation of probability estimates $(t_{i,k(m+1)}, s_{i,k(m+1)})$, the model being based on an approximation of each of the weighing signals by a linear combination of square-integrable basis functions weighted by coefficients $(c_i)$, the calculated probability estimates of the model comprising for each weighing signal a probability $(t_{i,k(m+1)})$ that the weighing signal belongs to a given homogeneous group (k) of weighing signals among several homogeneous groups, and a probability $(s_{i,k(m+1)})$ that the weighing signal presents an anomaly or not, wherein the probability estimates $(t_{i,k}, s_{i,k})$ are obtained by considering only eigenfunction coefficients having an impingement greater than a threshold value on the results and by using an operator projecting the eigenfunction coefficients into functional subspaces $(SE_K)$, each functional subspace being defined for a respective homogeneous group of the homogeneous groups, the eigenfunction coefficients being obtained from the multivariate functional principal component analysis.

2. The method according to claim 1, wherein each iteration (m) of the plurality of iterations is based on the execution of an expectation-maximization algorithm comprising:

an expectation step comprising the calculation of the probability estimates $(t_{i,K}, S_{i,k})$,

a first maximization step comprising the calculation of estimates of the parameters $(p_{k(m)}, a_{k(m)}, q_{k(m)}, Q_{k(m)}, \alpha_{k,j}, \beta_k)$ of the model using a multivariate functional principal component analysis, making it possible to define for each homogeneous group (k) a matrix variance in a functional subspace $(SE_k)$ defined by eigenfunctions, the matrix variance being modeled parsimoniously by elements formed from the largest eigenvalues $(\alpha_{k,j})$ of the homogeneous group and elements considered as noise and all equal to one of the parameters $(\beta_k)$ of the model, and

a second maximization step comprising the calculation of an inflation factor $(e_k)$.

3. The method according to any of claims 1 to 2, wherein:

each probability $(t_{ik(m+1)})$ that one of the weighing signals belongs to one of the homogeneous groups (k) is obtained by calculating the ratio between a contaminated Gaussian density of the homogeneous group and a sum of the contaminated Gaussian densities of all the homogeneous groups, taking into account the coefficients $(c_i)$, the contaminated Gaussian density of each of the homogeneous groups being calculated by the weighted sum of a first Gaussian density of each of the normal signals and a second Gaussian density of each of the abnormal signals in each homogeneous group, a covariance matrix of the Gaussian density of the abnormal signals being equal to a covariance matrix of the Gaussian density of the normal signals multiplied by an inflation factor $(e_k)$, each of the first and second Gaussian densities being calculated by the sum of a projection norm of the coefficients of the model in a functional subspace $(SE_k)$ defined for the homogeneous group, of a norm of a difference between the coefficients and the projection of the coefficients in the functional subspace defined for the homogeneous group and a term dependent on eigenvalues of the covariance matrix, and

each probability $(s_{i,k})$ that one of the weighing signals of one of the homogeneous groups (k) presents or not an anomaly is equal to the ratio between the Gaussian density of the normal signals of the homogeneous group and the contaminated Gaussian density of the homogeneous group, both being calculated with the coefficients $(c_i)$.

4. The method according to any of claims 1 to 3, comprising a step of initializing the parameters $(p_{k(m)}, a_{k(m)}, q_{k(m)}, Q_{k(m)}, \alpha_{k(m),j}, \beta_{k(m)}, e_{k(m)})$ and the probability estimates $(t_{i,k(m)}, s_{i,k(m)})$ of the model, randomly or using algorithms based on a minimization of a sum calculated for each homogeneous group (k) of distances between each coefficient $(c_i)$ and a centroid of the homogeneous group.

5. The method according to any of claims 1 to 4, wherein a new iteration is executed if an error variable (ERR) relating to the calculated parameters $(p_{k(m+1)}, a_{k(m+1)}, q_{k(m+1)}, Q_{k(m+1)}, \alpha_{k(m+1)}, \beta_{k(m+1)}, e_{k(m+1)})$ and the probability estimates $(t_{i,k(m+1)}, s_{i,k(m+1)})$ is greater than a threshold value $(\varepsilon)$ and if a maximum number of iterations (MX) is not reached.

6. The method according to any of claims 1 to 5, wherein the calculated parameters $(p_{k(m+1)}, a_{k(m+1)}, qk_{(m+1)}, Q_{k(m+1)}, \alpha_{k(m+1)}, \beta_{k(m+1)}, e_{k(m+1)})$ of the model comprise for each homogeneous group (k) of weighing signals:

a parameter $(p_k)$ representing a proportion of weighing signals $(x_{i,1}-x_{i,p})$ belonging to the homogeneous group,
a parameter $(a_k)$ representing a proportion of normal weighing signals in the homogeneous group,
a parameter $(q_k)$ representing a mean of a Gaussian distribution of the homogeneous group,
a matrix $(Q_k)$ gathering coefficients of a set of eigenfunctions of the homogeneous group, the coefficients of the eigenfunctions being obtained from multivariate functional principal component analysis, and
a matrix variance $(\alpha_{k,j}, \beta_k)$ having the form of a diagonal matrix gathering eigenvalues of the homogeneous group, obtained from multivariate functional principal component analysis, the matrix variance comprising the first largest values $(\alpha_{k,j})$ of the eigenvalues and elements equal to a mean value $(\beta_k)$ of the smallest values of the eigenvalues, and
a parameter $(e_k)$ representing an inflation factor of the covariance matrix of the homogeneous group, calculated by using projection operators.

7. The method according to any of claims 1 to 6, comprising steps of acquiring new weighing signals (xi*), calculating new coefficients $(c^*_i)$ obtained by approximating each of the new weighing signals by a linear combination of the basis functions weighted by new coefficients $(c^*_i)$, and updating the parameters $(p_{k(n+n^*)}, a_{k(n+n^*)}, q_{k(n+n^*)}, Q_{k(n+n^*)}, \alpha_{k(n+n^*)}, \beta_{k(n+n^*)}, e_{k(n+n^*)})$ and the probability estimates $(t_{i,k(n+n^*)}, s_{i,k(n+n^*)})$ of the model in one iteration, the probability $(t^*_{i,k})$ that one of the new weighing signals $(x^*_i)$ belongs to a homogeneous group of weighing signals and the probability $(s^*_{i,k})$ that one of the new weighing signals has an anomaly or not, being estimated using projection operators to project the new coefficients into the functional subspaces $(SE_k)$ defined from previously calculated model parameters $(p_{k(m+1)}, a_{k(m+1)}, q_{k(m+1)}, Q_{k(m+1)}, \alpha_{k(m+1),j}, \beta_{k(m+1)}, e_{k(m+1)}, ti,k(m+1), Si,k(m+1))$.

8. The method according to claim 7, wherein the updated parameters ($p_{k(n+n^*)}$, $a_{k(n+n^*)}$, $q_{k(n+n^*)}$, $Q_{k(n+n^*)}$, $\alpha_{k(n+n^*)}$, $\beta_{k(n+n^*)}$, $e_{k(n+n^*)}$) of the model comprise for each homogeneous group (k):

a parameter ($p_{k(n+n^*)}$) representing a proportion of previous and new weighing signals ($x_{i,1}$-$x_{i,p}$, $x^*_{i,1}$-$x^*_{i,p}$) belonging to the homogeneous group, and calculated by a weighted average of a corresponding previous parameter ($p_{k(n)}$) and a number of new signals belonging to the homogeneous group,
a parameter ($a_{k(n+n^*)}$) representing a proportion of previous and new normal weighing signals in the homogeneous group, and calculated by a weighted average of a corresponding previous parameter ($a_{k(n)}$) and the number of new normal signals belonging to the homogeneous group,
a parameter ($q_{k(n+n^*)}$) representing an average of the previous and new weighing signals of a Gaussian distribution of the homogeneous group, and calculated by a weighted average of a corresponding previous parameter ($q_{k(n)}$) and an average of the new signals belonging to the homogeneous group,
a matrix ($Q_{k(n+n^*)}$) of vectors formed by coefficients of eigenfunctions, the matrix being estimated by multiplying a rotation matrix by a corresponding previous matrix ($Q_{k(n)}$) if the new weighing signals are represented in the functional subspace (SEk), or otherwise estimated by multiplying the rotation matrix by a matrix consisting of a concatenation of the corresponding previous matrix and a matrix consisting of projection errors of the new coefficients in the functional subspace,
a matrix variance ($\alpha_{k,j(n+n^*)}$, $\beta_{k(n+n^*)}$) having the form of a diagonal matrix gathering new eigenvalues ($\alpha_{k,j(n+n^*)}$) of the homogeneous group, obtained from a previous matrix variance, the previous vector matrix ($Q_{k(n)}$), the new coefficients ($c_i^*$) and the average of the normal weighing signals, and elements ($\beta_{k(n+n^*)}$) obtained from an average value of the difference between the sum of the elements of the previous matrix variance ($\alpha_{k,j(n)}$, $\beta_{k(n)}$) and the sum of the new eigenvalues ($\alpha_{k,j(n,n^*)}$), and
a parameter ($e_k$) representing an inflation factor of the covariance matrix of the homogeneous group, calculated by a weighted average of a corresponding previous parameter ($e_{k(n)}$) and an inflation factor of the new weighing signals calculated from projection operators.

9. The method according to any of claims 1 to 8, comprising steps of acquiring and sampling, by the processing unit (CU) of weighing signals ($x_{i,1}$-$x_{i,p}$) from intermediate sensors (C5-C8) installed on the weighbridge (1) between the input and output sensors (C1-C4).

10. A system for weighing a wheeled vehicle, comprising:

a weighbridge (1) comprising input sensors arranged to be loaded simultaneously by a first set of wheels of the vehicle, and output sensors arranged to be simultaneously loaded by the first set of wheels of the vehicle, when the vehicle crosses the weighbridge,
a processing unit (CU) configured to acquire and sample weighing signals ($x_{i,1}$-$x_{i,p}$) from the input and output sensors and execute a plurality of iterations (m) for calculating parameters ($p_{k(m+1)}$, $a_{k(m+1)}$, $q_{k(m+1)}$), $Q_{k(m+1)}$, $\alpha_{k(m+1)}$, $\beta_{k(m+1)}$, $e_{k(m+1)}$) and probability estimates ($t_{i,k(m+1)}$, $s_{i,k(m+1)}$) of a model, in accordance with the method according to any of claims 1 to 9.

11. The system according to claim 10, wherein the sensors (C1, C3 - C2, C4) are aligned along lateral edges of the weighbridge (1).

12. The system according to claim 10 or 11, comprising at least three sensors (C1, C3, C5, C7) aligned along a lateral edge of the weighbridge (1).

13. The system according to any of claims 10 to 12, wherein the sensors (C1-C4, C1-C8) are arranged so as to be aligned along axes (Y1, Y2) perpendicular to a longitudinal direction (X) of the weighbridge (1).

Fig. 1

Fig. 2

Fig. 3

Fig. 4

Fig. 5

S1 — Acq. $x_{i(1..n)}$

S2 — Cp. $c_i$

S3 — Init. $K$, $d_k$, $\varepsilon$, $MX$

S4 — Init. $T_{i,k}$, $s_{i,k}$, $e_{k(1)}=1$

S5 — $m = 1$

S6 — Cp. $p_{k(1)}$, $a_{k(1)}$, $q_{k(1)}$, $Q_{k(1)}$, $\alpha_{k(1),j}$, $\beta_{k(1)}$

S7 — Cp. $t_{i,k(m+1)}$, $s_{i,k(m+1)}$

S8 — Cp. $p_{k(m+1)}$, $a_{k(m+1)}$, $q_{k(m+1)}$, $Q_{k(m+1)}$, $\alpha_{k(m+1),j}$, $\beta_{k(m+1)}$

S9 — Cp. $e_{k(m+1)}$

S10 — $m>1$ ? — Y — S11 — Cp. ERR

N

S12 — $m = m+1$

S13 — $m<MX$ & ERR$<\varepsilon$? — Y

N

S14 — $t_{i,k(m+1)}$, $s_{i,k(m+1)}$
$k=1, ..., K$

S21 — Acq. $x_i^*$

S22 — Cp. $c_i^*$

S23 — Cp. $t_{i,k}^*$, $s_{i,k}^*$, $ac$

Fig. 6

S24 — $ac<th_k$ ? — N

Y

S25 — Cp. $p_{k(n+n^*)}$, $a_{k(n+n^*)}$, $q_{k(n+n^*)}$, $Q_{k(n+n^*)}$, $\alpha_{k(n+n^*),j}$, $\beta_{k(n+n^*)}$

S26 — Cp. $p_{k(n+n^*)}$, $a_{k(n+n^*)}$, $q_{k(n+n^*)}$, $Q_{k(n+n^*)}$, $\alpha_{k(n+n^*),j}$, $\beta_{k(n+n^*)}$

S27 — Cp. $e_{k(m+n)}$

Fig. 7

Fig. 8

## RÉFÉRENCES CITÉES DANS LA DESCRIPTION

**Documents brevets cités dans la description**

- CN 203643013 U

**Littérature non-brevet citée dans la description**

- **M. AMOVIN-ASSAGBA** ; **I. GANNAZ** ; **J. JACQUES**. Outlier Detection in Multivariate Functional Data Through a Contaminated Mixture Model. *Computational Statistics and Data Analysis*, 2022, vol. 174, 107496